# EUROPEAN PATENT SPECIFICATION

(11) **EP 2 923 984 B1**
(45) Date of publication and mention of the grant of the patent: **30.05.2018**
(21) Application number: 15160091.3
(22) Date of filing: 20.03.2015
(51) Int. Cl.: B65H 37/04, D06H 5/00, B29C 65/52, B29C 65/78, B29C 65/00, B29C 65/48, B29C 65/40

(54) **CLOTH FEED MECHANISM AND CLOTH BONDING APPARATUS**
TUCHZUFÜHRMECHANISMUS UND TUCHVERBINDUNGSVORRICHTUNG
MÉCANISME D'ALIMENTATION DE TISSU ET APPAREIL DE LIAISON DE TISSU

(30) Priority: 28.03.2014 JP 2014067418
(43) Date of publication of application: 30.09.2015
(73) Proprietor: Brother Kogyo Kabushiki Kaisha, Nagoya-shi, Aichi 467-8561 (JP)
(72) Inventor: Iwakoshi, Hiroyasu, Aichi 467-8562 (JP); Umeda, Kazutoshi, Aichi 467-8562 (JP); Shibata, Itaru, Aichi 467-8562 (JP); Minagawa, Yuichiro, Aichi 467-8562 (JP)
(74) Representative: Prüfer & Partner mbB Patentanwälte · Rechtsanwälte

(56) References cited:
- EP-A1- 2 233 279
- EP-A1- 2 650 244
- GB-A- 2 305 391
- US-A- 4 608 114

## Description

### BACKGROUND

The present invention relates to a cloth feed mechanism and a cloth bonding apparatus provided with the cloth feed mechanism.

A cloth bonding apparatus disclosed in Japanese Laid-Open Patent Publication No. 2010-180486 is an apparatus that bonds two cloths together using adhesive. The cloth bonding apparatus is provided with a base portion, a pillar portion and an arm portion. The base portion is a foundation having an upper surface that extends in the horizontal direction. The pillar portion extends upward from an end portion of the base portion. The arm portion extends laterally from the upper end of the pillar portion. The cloth bonding apparatus is provided with a feed mechanism and a nozzle, in a position at which a leading end of the arm portion and the base portion face each other. The feed mechanism is provided with two rollers. An upper roller is provided below the leading end of the arm portion. A lower roller is provided in a position on the base portion below the upper roller. The feed mechanism clamps two cloths that are to be bonded together between the upper roller and the lower roller and feeds the cloths. The nozzle applies adhesive between the two cloths. The nozzle is provided on the leading end of the arm portion and has discharge ports (which discharge the adhesive) on an upstream side of the feed mechanism in a cloth feed direction. The feed mechanism presses the two cloths between the upper roller and the lower roller and thus bonds the cloths to each other.

### SUMMARY

The upper surface of the base portion of the above-described cloth bonding apparatus is a flat surface that extends horizontally. Thus, the cloth bonding apparatus is suitable when moving the two cloths using the two rollers in the horizontal direction and bonding them. However, the bonding of cloths that form curved planes, such as three-dimensional shapes after bonding is difficult. In this case, depending on the shape of the cloths to be bonded, it is necessary to prepare a plurality of cloth bonding apparatuses each having a different shaped base portion. Preparing the plurality of cloth bonding apparatuses each having a different shaped based portion depending on the shape of the cloths to be bonded causes a problem in terms of an increase in costs. EP 2 233 279 A1 discloses a cloth feed mechanism in accordance to the preamble of claim 1. Other devices are known from EP 2 650 244 A1; GB 2 305 391 A; and US 4 608 114 A.

It is an object of the present invention to provide a cloth feed mechanism that is capable of easily changing a mode of a section that feeds a cloth, and a cloth bonding apparatus that is provided with the cloth feed mechanism. This object is achieved by the cloth feed mechanism having the features of claim 1. The present invention is further developed as defined in the dependent claims.

A cloth bonding apparatus of the present invention includes a nozzle, a first roller and a cloth feed mechanism. The nozzle discharges an adhesive between two cloths that are disposed facing each other. The cloth feed mechanism includes a second roller. The second roller is disposed facing the first roller on a downstream side in a feed direction of the cloths, with respect to the nozzle. The cloth feed mechanism clamps, between the first roller and the second roller, the two cloths to which the adhesive is adhered and feeds the two cloths.

The cloth feed mechanism of the present invention further includes a main body portion, a motor and a transmission portion in accordance to claim 1. As a result, in the cloth feed mechanism, the second main body portion can be removed from the first main body portion and can be exchanged for another second main body portion. The other second main body portion is, for example, a modified form of the second main body portion having a mode in which a position and a type of the second roller etc. are different. Thus, the cloth feed mechanism can realize commonality of components. When one of the first main body portion and the second main body portion fails, it is possible to continue to use the cloth feed mechanism if only the failed component is replaced with a new component. The cloth feed mechanism can continue to use the normally functioning component, and there is no need to exchange the whole mechanism. As a result, it is possible to reduce costs relating to maintenance etc. of the cloth feed mechanism.

The cloth feed mechanism may have the following structure. The first main body portion is provided with a first pulley that is coupled with the output shaft of the motor. The second main body portion is provided with a second pulley. The second pulley has a pivotal shaft that is parallel to a pivotal shaft of the first pulley and the second pulley rotates integrally with the second roller. The transmission portion is an endless belt, which is stretched between the first pulley and the second pulley. The main body portion includes a joint portion that is provided between the first main body portion and the second main body portion and that detachably couples the first main body portion and the second main body portion. The joint portion is capable of internally storing the belt. By the joint portion being coupled between the first main body portion and the second main body portion, it is possible to make the main body portion longer in the a long-side direction. Thus, the cloth feed mechanism can change a length of the main body portion in accordance with a shape of the cloths. It is therefore not necessary to manufacture the cloth feed mechanism in accordance with the cloth shape and the cloth feed mechanism can realize the commonality of components of the first main body portion and the second main body portion, and manufacturing costs can be reduced. The joint portion simply stores the belt at the inside thereof. Thus, the structure can be simplified.

The cloth feed mechanism may have the following structure. The first main body portion is provided with a tension pulley that imparts a tension to the belt. The first pulley is disposed coaxially with the output shaft of the motor. The output shaft of the motor is disposed in a position that is displaced in a specific direction with respect to the second pulley, the specific direction being orthogonal to the a long-side direction and being orthogonal to an extending direction of the pivotal shaft of the second pulley. The tension pulley is disposed on an outer side of the belt, on the side of the direction of displacement in the specific direction of the output shaft with respect to the second pulley. Thus, the cloth feed mechanism can cause sides of the belt to come closer together between the first pulley and the second pulley, and the joint portion can be formed to be thinner. For example, when a cylindrically shaped cloth is fed in a circumferential direction, an operator can pass the cylindrically shaped cloth around the joint portion. The cloth feed mechanism can thus feed cloths of a variety of shapes.

The cloth feed mechanism may have the following structure. The a long-side direction is the horizontal direction and the specific direction is the downward direction. The cloth feed mechanism is provided with a cover. The cover covers the first main body portion, the second main body portion and the joint portion from above. The cover includes a planar portion that extends horizontally on an upstream side of the second roller in the feed direction of the cloth. The cover covers the first main body portion, the second main body portion and the joint portion from above, and thus the planar portion of the cover is positioned on the upper side of the cloth feed mechanism. The planar portion extends horizontally on the upstream side of the second roller in the feed direction of the cloth. Therefore, in the cloth feed mechanism, the section to be bonded of the cloths to be bonded can be placed on the planar portion and can be bonded in a stable manner.

The cloth bonding apparatus of the present invention includes the nozzle, the first roller and the cloth feed mechanism. The first roller is disposed on a downstream side in a feed direction of the two cloths with respect to the nozzle and feeds the two cloths. The cloth feed mechanism has the second roller that is disposed below the first roller and in a position facing the first roller. The cloth bonding apparatus clamps the two cloths, to which the adhesive is adhered, between the first roller and the second roller and feeds the two cloths. The first main body portion and the second main body portion can be separated from each other and coupled together. As a result, in the cloth feed mechanism, the second main body portion can be removed from the first main body portion and can be exchanged for another second main body portion. The other second main body portion is, for example, a modified form of the second main body portion having a mode in which a position and a type of the second roller etc. are different. Thus, the cloth feed mechanism can realize commonality of components. When one of the first main body portion and the second main body portion fails, it is possible to continue to use the cloth feed mechanism if only the failed component is replaced with a new component. The cloth feed mechanism can continue to use the normally functioning component, and there is no need to exchange the whole mechanism. As a result, it is possible to reduce costs relating to maintenance etc. of the cloth bonding apparatus.

The cloth bonding apparatus may include a base portion that is a foundation of the cloth bonding apparatus, and a mounting portion that is fixed to the base portion and that has a wall portion to which the first main body portion is attached. A fixing position of the cloth feed mechanism with respect to the wall portion of the mounting portion may be changeable. By changing the fixing position of the cloth feed mechanism with respect to the wall portion of the mounting portion, the cloth bonding apparatus can change a position in which the second roller faces the first roller. As a result, the cloth bonding apparatus can adjust the position of the cloth feed mechanism in accordance with the cloths to be bonded, and can bond cloths having a variety of shapes.

### BRIEF DESCRIPTION OF THE DRAWINGS

Embodiments will be described below in detail with reference to the accompanying drawings in which:
FIG. 1 is a perspective view of a cloth bonding apparatus 1 to which a cloth feed mechanism 12 has been attached;
FIG. 2 is a left side view of the cloth bonding apparatus 1 to which the cloth feed mechanism 12 has been attached;
FIG. 3 is a perspective view of the cloth bonding apparatus 1, and shows the interior of a head portion 5;
FIG. 4 is a perspective drawing showing an internal structure of the cloth bonding apparatus 1;
FIG. 5 is a diagram showing positional relationships between an upper roller 18, a lower roller 13 and a nozzle 17 (when the nozzle 17 is in a close position);
FIG. 6 is a diagram showing positional relationships between the upper roller 18, the lower roller 13 and the nozzle 17 (when the nozzle 17 is in a retracted position);
FIG. 7 is an exploded perspective view of a motor mounting portion 27, a pulse motor 30 and a stopper 35;
FIG. 8 is an exploded perspective view of the cloth bonding apparatus 1 shown in FIG. 1;
FIG. 9 is a perspective view of the cloth feed mechanism 12;
FIG. 10 is an exploded perspective view of the cloth feed mechanism 12;
FIG. 11 is a perspective view of the cloth feed mechanism 12 in which part of a motor drive portion 50 is cut away (a coupling block 60 is omitted);
FIG. 12 is a perspective view of the cloth feed mechanism 12 to which a roller support portion 170 is attached;
FIG. 13 is a perspective view of the cloth feed mechanism 12 to which a roller support portion 270 is attached;
FIG. 14 is a perspective view of the cloth bonding apparatus 1 to which a cloth feed mechanism 320 is attached;
FIG. 15 is a left side view of the cloth bonding apparatus 1 to which the cloth feed mechanism 320 is attached;
FIG. 16 is an exploded perspective view of the cloth bonding apparatus 1 shown in FIG. 14;
FIG. 17 is a perspective view of the cloth feed mechanism 320; and
FIG. 18 is an exploded perspective view of the cloth feed mechanism 320.

### DETAILED DESCRIPTION

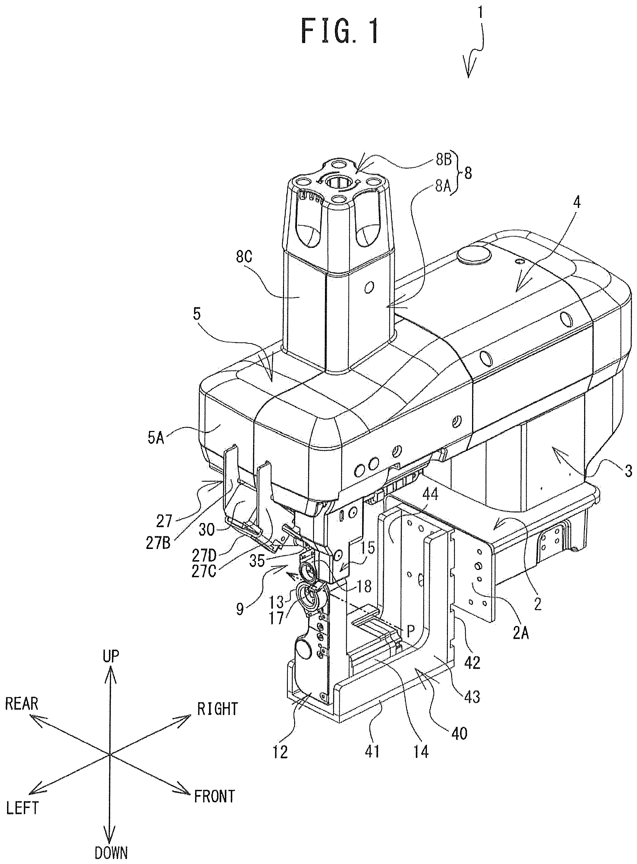

In the explanation below, the up and down, the left and right, and the front and rear shown by arrows in the drawings are used. A cloth bonding apparatus 1 shown in FIG. 1 is an apparatus that bonds two cloths using an adhesive. A cloth feed mechanism 12 of a present embodiment is a mechanism to feed the two cloths while clamping and pressing them, in a state in which the cloth feed mechanism 12 is attached to the cloth bonding apparatus 1.

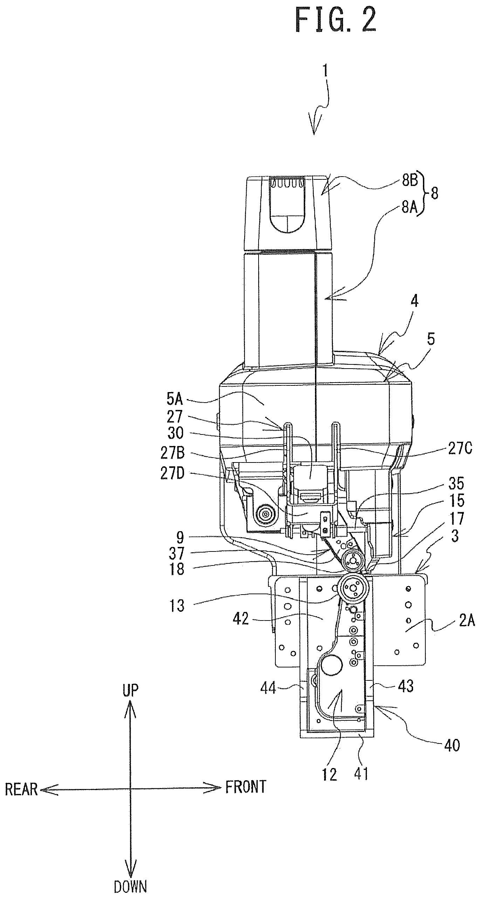

An external structure of the cloth bonding apparatus 1 will be explained with reference to FIG. 1 and FIG. 2. The cloth bonding apparatus 1 is provided with a base portion 2, a pillar portion 3, an arm portion 4, a head portion 5, a mounting member 40 and the cloth feed mechanism 12. The base portion 2 is a base of the cloth bonding apparatus 1 and has a substantially cuboid shape. A mounting surface 2A is provided on the left side surface of the base portion 2. The pillar portion 3 extends vertically upward from the right end of the base portion 2. The arm portion 4 is connected to the upper end of the pillar portion 3 and extends in the left-right direction. The left end of the arm portion 4 protrudes further to the left than the left side surface of the pillar portion 3. The head portion 5 is provided on the left end of the arm portion 4. The head portion 5 has a substantially cuboid shape. The head portion 5 protrudes further to the left from the arm portion 4. The base portion 2 is a foundation that supports the pillar portion 3. The head portion 5 has a cover 5A that can be attached to and removed from the head portion 5. The bottom surface side of the head portion 5 is provided with an upper roller 18 and a nozzle 17. The nozzle 17 applies adhesive to a cloth.

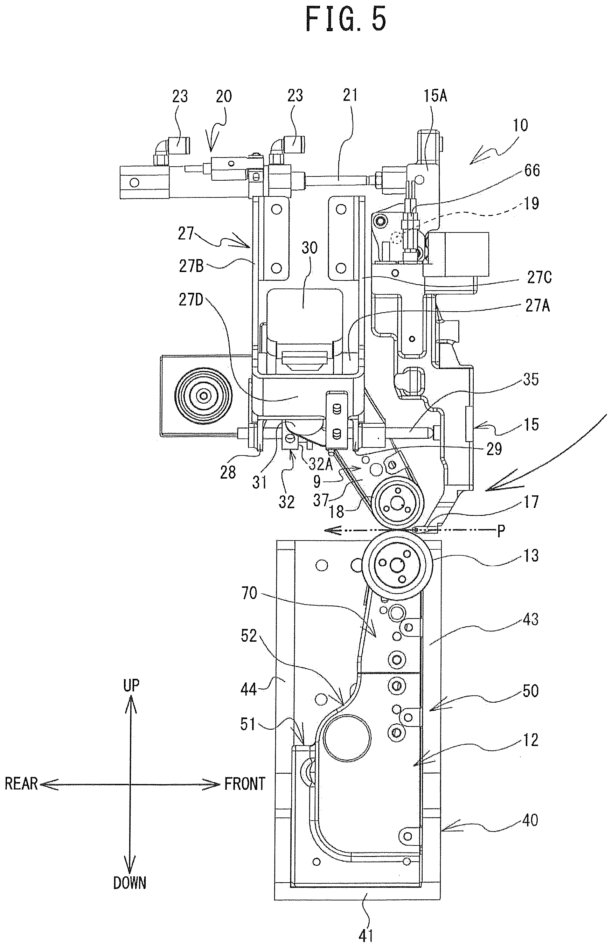

The cloth feed mechanism 12 is attached to the mounting surface 2A of the base portion 2 using the mounting member 40. The cloth feed mechanism 12 can be mounted on and removed from the mounting member 40. The cloth feed mechanism 12 is formed such that a roller support portion 70 extends in the up-down direction and a lower roller 13 that is disposed facing the upper roller 18 is supported above the roller support portion 70. The cloth feed mechanism 12 is of a "column type." An axial direction of each of the upper roller 18 and the lower roller 13 is parallel to the left-right direction of the cloth bonding apparatus 1. An outer diameter of the lower roller 13 is larger than an outer diameter of the upper roller 18 (refer to FIG. 5). The cloth feed mechanism 12 drives and rotates the lower roller 13 and feeds the cloth from the front toward the rear in concert with the upper roller 18. A feed direction of the cloth (hereinafter referred to as a cloth feed direction) is a direction from the front to the rear of the cloth bonding apparatus 1 (a direction indicated by an arrow of the two-dot chain line P in FIG. 1 and FIG. 5). The nozzle 17 is positioned on an upstream side, in the cloth feed direction, of a contact portion at which the upper roller 18 and the lower roller 13 are in contact with each other (refer to FIG. 2 and FIG. 5).

The base portion 2 can be fixed into a mounting opening provided on a work table. By fixing the base portion 2 into the mounting opening, the cloth bonding apparatus 1 can be installed on the work table. The top surface of the work table is provided with an operating panel. An operator sets various operations of the cloth bonding apparatus 1 using the operating panel. A pedal is provided below the work table. The pedal is an operating device to adjust a feeding speed of the cloth.

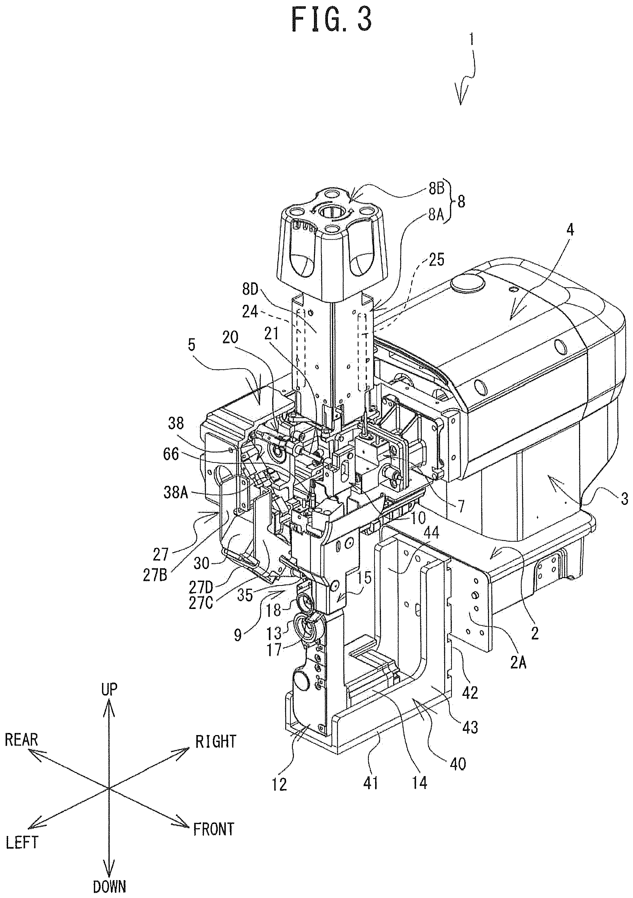

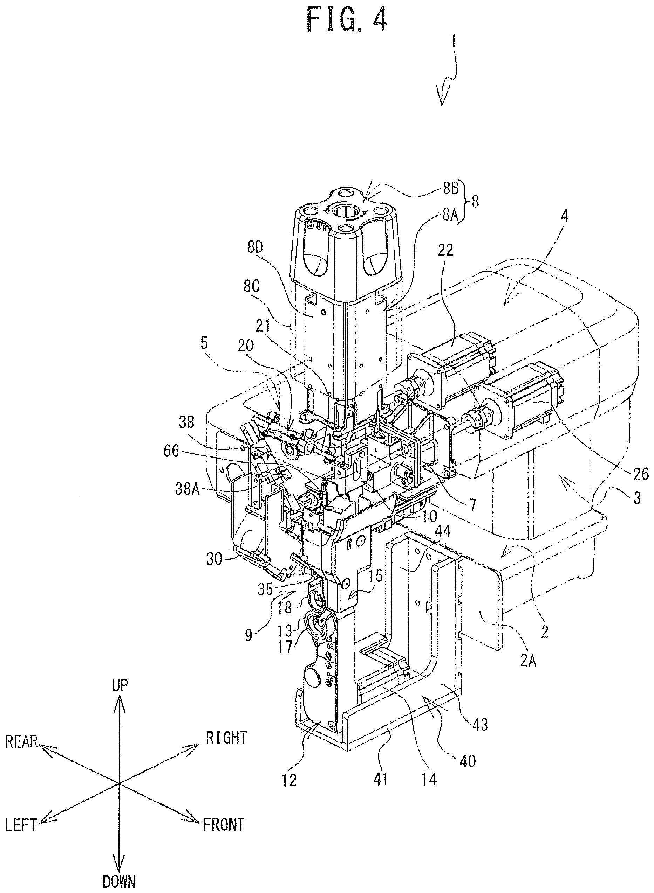

A structure of the head portion 5 and an internal structure of the cloth bonding apparatus 1 will be specifically explained with reference to FIG. 3 to FIG. 6. As shown in FIG. 3, the head portion 5 supports a pump portion 7, a storage portion 8, an upper roller mechanism 9, a nozzle swinging mechanism 10 and the like. The cover 5A (refer to FIG. 1) houses the pump portion 7, the upper roller mechanism 9, the nozzle swinging mechanism 10 and the like, at the inside thereof. The pump portion 7 is provided to the right and to the front of the head portion 5. The interior of the pump portion 7 is provided with a supply passage, a gear pump, a first motor 26 (refer to FIG. 4) and the like. The supply passage leads the adhesive from the storage portion 8 to the gear pump. The gear pump accurately supplies an appropriate amount of the adhesive to the nozzle 17 that will be described later. As shown in FIG. 4, the first motor 26 is provided inside the arm portion 4. The first motor 26 drives the gear pump.

The storage portion 8 is provided to the rear of the pump portion 7. The storage portion 8 has a substantially cuboid shape and extends upward from the center of an upper surface of the head portion 5. The storage portion 8 is provided with a main body portion 8A and a lid portion 8B. The main body portion 8A is provided with a cover 8C and a storage chamber 8D. The cover 8C has a square tube shape and covers the periphery of the storage chamber 8D. The storage chamber 8D has a bottomed cylindrical shape having an upper portion opening. The storage chamber 8D stores a hot melt adhesive in a reservoir portion inside the storage chamber 8D. The storage chamber 8D supplies the adhesive stored in the reservoir portion to the nozzle 17 as required, via the gear pump. The hot melt adhesive is liquefied when it is heated to a predetermined temperature, and solidifies at a lower temperature than the predetermined temperature. The storage chamber 8D is provided with heaters 24 and 25 (refer to FIG. 3) on both sides of the reservoir portion. The heaters 24 and 25 heat the reservoir portion. The adhesive thus melts inside the reservoir portion and becomes liquid.

The lid portion 8B can be attached to and removed from an upper portion of the storage chamber 8D and opens and closes the opening of the upper portion of the storage chamber 8D. When the lid portion 8B is fixed to the upper portion of the storage chamber 8D, the operator screws on the lid portion 8B by a rotation operation. When the lid portion 8B is removed from the upper portion of the storage chamber 8D, the operator loosens the lid portion 8B by a rotation operation. A shape of the lid portion 8B and a structure for opening and closing the opening of the upper portion of the storage chamber 8D may be another format. For example, a structure may be adopted in which the storage portion 8 has a shaft portion on an end portion of the opening of the upper portion and a plate-shaped lid portion may be supported by the shaft portion such that the lid portion can be opened and closed.

The upper roller mechanism 9 is provided below the head portion 5. The upper roller mechanism 9 is provided with a support portion 37 (refer to FIG. 2 and FIG. 5), an air cylinder 38, the upper roller 18, a second motor 22 (refer to FIG. 4) and the like. The support portion 37 rotatably supports the upper roller 18 below the head portion 5. The support portion 37 extends in the front-rear direction. The air cylinder 38 is provided inside the head portion 5. The air cylinder 38 is provided with an air inlet 38A. An intake and exhaust hose is connected to the air inlet 38A. The cloth bonding apparatus 1 controls the intake and exhaust of compressed air from the intake and exhaust hose to the air inlet 38A. The position of a piston that is provided inside the air cylinder 38 moves under the control of the air intake and exhaust. A movable portion is provided on a lower end portion of the piston and the movable portion is connected to an upper portion of the support portion 37. When the piston moves, the front end of the support portion 37 swings downward via the movable portion. This maintains a state in which the upper roller 18 and the lower roller 13 are in contact with each other. As shown in FIG. 4, the second motor 22 is provided inside the arm portion 4 to the right of the storage chamber 8D. The second motor 22 is positioned to the rear of the first motor 26. The power of the second motor 22 is transmitted to the upper roller 18 by a plurality of pulleys and belts etc. that are provided inside the support portion 37.

As shown in FIG. 3 and FIG. 5, the nozzle swinging mechanism 10 is provided on the left side of a front portion of the head portion 5. The nozzle swinging mechanism 10 is provided with a nozzle lever 15, the nozzle 17, an air cylinder 20 and the like. The nozzle lever 15 has an arm shape and extends downward from above on the front left side of the head portion 5. The nozzle lever 15 can swing in the front-rear direction around a pivotal shaft 19. The pivotal shaft 19 is provided in a position that is slightly separated from and is below an upper end portion 15A of the nozzle lever 15. The pivotal shaft 19 extends in the left-right direction. The right end of the pivotal shaft 19 connects to the pump portion 7, and the left end of the pivotal shaft 19 supports the nozzle lever 15. The pivotal shaft 19 is internally provided with a passage for the adhesive. The nozzle lever 15 is internally provided with a supply passage for the adhesive. The passage provided inside the pivotal shaft 19 and the supply passage provided inside the nozzle lever 15 are communicatively connected with each other, and cause the adhesive supplied by the pump portion 7 to flow toward the nozzle 17. The nozzle lever 15 is provided with a heater 66 in the vicinity of the supply passage provided inside the nozzle lever 15. The nozzle 17 is provided on the lower end portion of the nozzle lever 15. The nozzle 17 extends downward from the lower end portion of the nozzle lever 15, bends and extends to the right side along the cloth.

The air cylinder 20 is provided on the upper left side of the head portion 5, on the downstream side of the nozzle lever 15 in the cloth feed direction. The air cylinder 20 is provided with an air inlet 23. An intake and exhaust hose is connected to the air inlet 23. The cloth bonding apparatus 1 controls the intake and exhaust of compressed air from the intake and exhaust hose to the air inlet 23. The position of a piston that is provided inside the air cylinder 20 moves under the control of the air intake and exhaust. A rod-like movable portion 21 extends in the front-rear direction and is connected to the piston. When the piston moves, the movable portion 21 moves in the front-rear direction. As shown in FIG. 5, a leading end portion of the movable portion 21 is rotatably connected to the upper end portion 15A of the nozzle lever 15.

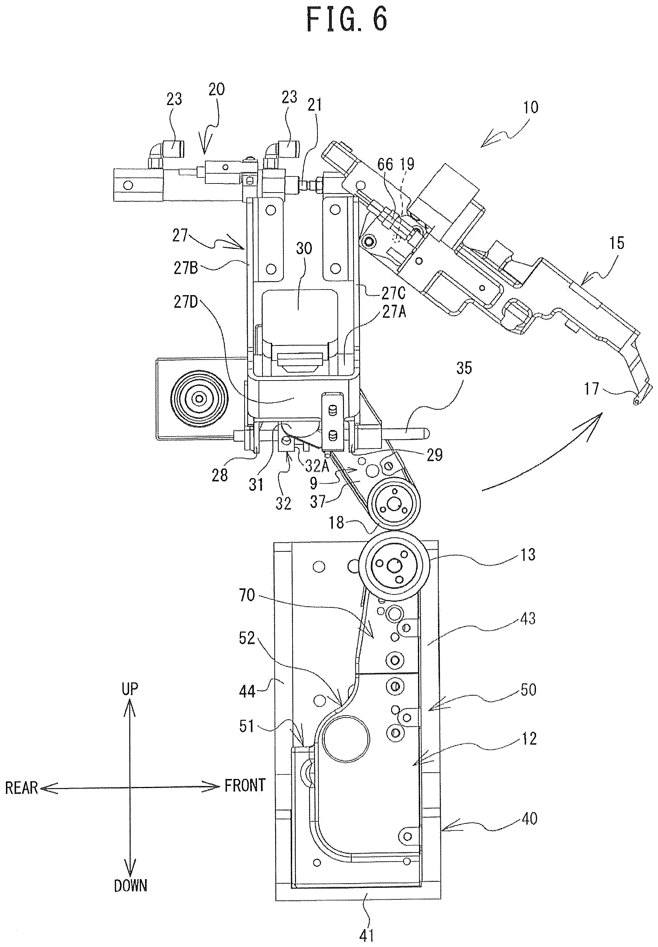

When the movable portion 21 of the air cylinder 20 moves forward, the nozzle lever 15 swings significantly around the pivotal shaft 19 and the nozzle 17 moves to a close position. As shown in FIG. 6, when the movable portion 21 of the air cylinder 20 moves rearward, the nozzle lever 15 swings significantly around the pivotal shaft 19, and the nozzle 17 moves to a retracted position. The close position is a position in which the nozzle 17 approaches a contact portion of the upper roller 18 and the lower roller 13 from the front side. When a cloth bonding operation is performed, the nozzle 17 moves to the close position. The retracted position is a position in which the nozzle 17 has been separated, significantly to the front, from the contact portion of the upper roller 18 and the lower roller 13. When maintenance etc. of the nozzle 17 is performed, the nozzle 17 moves to the retracted position.

The nozzle 17 is substantially a rod shape. A lower side of the nozzle 17 is provided with a plurality of discharge ports. The discharge ports are holes that are used to discharge the adhesive. When the operator performs the cloth bonding operation, the cloth bonding apparatus 1 swings the nozzle lever 15 and moves the nozzle 17 to the close position. The discharge ports face a rolling contact surface (an outer peripheral surface) of the lower roller 13. The pump portion 7 supplies the adhesive to the nozzle 17 via the supply passage inside the nozzle lever 15. The nozzle 17 discharges the adhesive from the discharge ports. The adhesive attaches to a top surface of one of cloths positioned below the nozzle 17. In a state in which the other cloth is adhered to the cloth on whose top surface the adhesive has been applied, the upper roller 18 and the lower roller 13 press the two cloths and feed them toward the rear.

As shown in FIG. 2 and FIG. 3, a motor mounting portion 27, a pulse motor 30 and a stopper 35 etc. are provided on the left side surface of the head portion 5. The motor mounting portion 27 is provided with a base portion 27A (refer to FIG. 5), a pair of mounting portions 27B and 27C, and an installation portion 27D etc. The base portion 27A is plate-shaped. The pair of mounting portions 27B and 27C are respectively plate-shaped, and stand upward from both the front and rear end portions of the base portion 27A. Screws fix upper end portions of each of the mounting portions 27B and 27C to the left side surface of the head portion 5. The installation portion 27D is plate-shaped and forms a connection between the mounting portions 27B and 27C. The installation portion 27D inclines slightly downward from its left end side with respect to the horizontal plane. The installation portion 27D reinforces the motor mounting portion 27. The base portion 27A inclines slightly upward from its left end side with respect to the horizontal plane (refer to FIG. 5). The pulse motor 30 is fixed to the upper surface of the base portion 27A.

As shown in FIG. 5, annular support pieces 28 and 29 are provided, respectively, on both sides in the front-rear direction of the lower surface of the base portion 27A. The support pieces 28 and 29 protrude downward. The stopper 35 is rod-shaped and extends in the front-rear direction, and is inserted through each of the support pieces 28 and 29. A front end portion of the stopper 35 is substantially spherical. The support pieces 28 and 29 support the stopper 35 such that the stopper 35 can move in the horizontal direction. An engagement portion 32 is provided substantially in the center, in the front-rear direction, of the stopper 35. The engagement portion 32 is substantially cylindrical and is positioned between the support piece 28 and the support piece 29. The engagement portion 32 is fixed to the stopper 35 in a state in which the stopper 35 is inserted into the engagement portion 32. An outer peripheral surface of the engagement portion 32 has an engagement groove 32A that is recessed toward the inside in the radial direction.

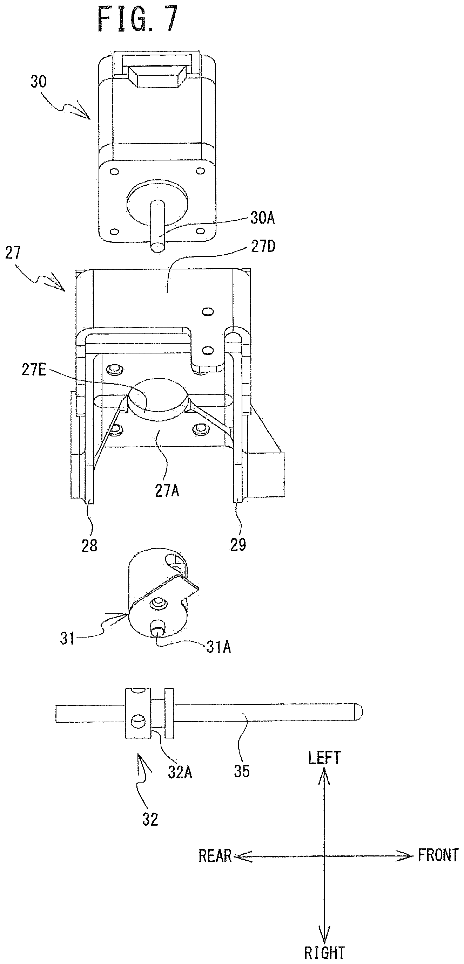

As shown in FIG. 7, an output shaft 30A of the pulse motor 30 penetrates through a hole 27E provided in the base portion 27A and extends toward the stopper 35. An eccentric portion 31 is attached to the leading end portion of the output shaft 30A. The eccentric portion 31 is substantially cylindrical and an axial direction of the eccentric portion 31 is the same as an axial direction of the output shaft 30A. The eccentric portion 31 is provided with an eccentric pin 31 A, on a surface on the opposite side to the pulse motor 30. The eccentric pin 31A is provided in a position that is displaced, in the radial direction, from an axial center of the eccentric portion 31. The eccentric pin 31A fits into the engagement groove 32A of the engagement portion 32.

The pulse motor 30 rotates the output shaft 30A in the normal direction and the reverse direction. The eccentric portion 31 rotates integrally with the output shaft 30A. The eccentric pin 31A moves in the front-rear direction in accordance with the rotation of the eccentric portion 31. The stopper 35 moves in the front-rear direction via the engagement portion 32, in accordance with the movement of the eccentric pin 31 A.

When the nozzle 17 is in the close position, the front end portion of the stopper 35 comes into contact with a lower portion of the rear surface of the nozzle lever 15. By controlling a rotation position of the pulse motor 30, the cloth bonding apparatus 1 adjusts a position of the stopper 35 in the front-rear direction with a high degree of accuracy. By adjusting the position of the stopper 35 in the front-rear direction, the cloth bonding apparatus 1 can adjust the position of the nozzle lever 15 when the nozzle 17 is in the close position. The cloth bonding apparatus 1 can thus adjust the position of the nozzle 17 and adjust a nozzle gap with a high degree of accuracy. The nozzle gap is a gap between the discharge ports of the nozzle 17 and the rolling contact surface of the lower roller 13.

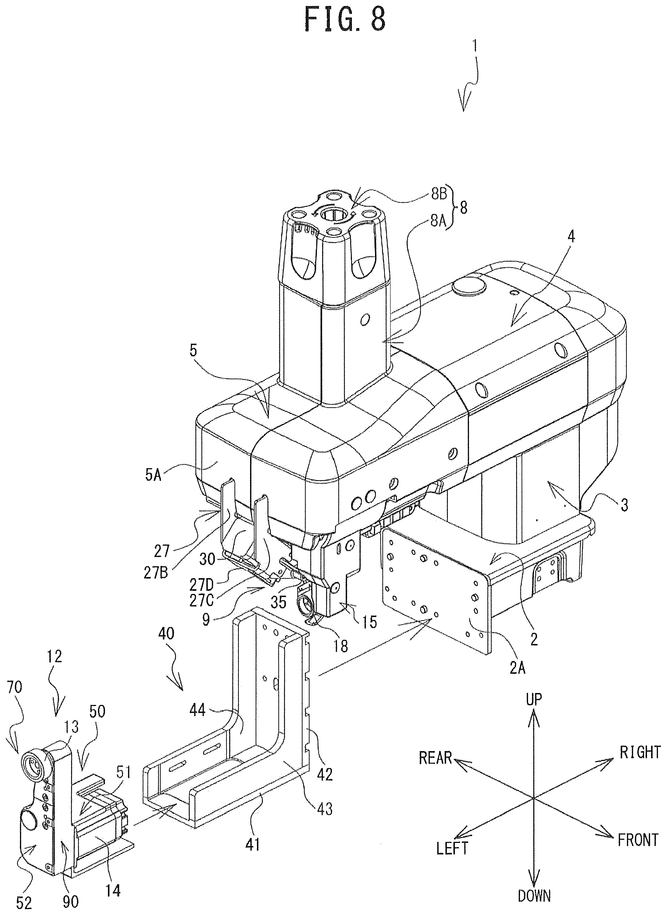

A structure of the mounting member 40 will be explained with reference to FIG. 8. The mounting member 40 is a metal member that is formed substantially in a U-shape when viewed from the left side, and is formed substantially in an L shape when viewed from the front, as shown in FIG. 8. The mounting member 40 is provided with a first bottom wall 41, a second bottom wall 42 and a pair of side walls 43 and 44. The first bottom wall 41 is a rectangular plate-shaped member. The second bottom wall 42 is a rectangular plate-shaped member having the same length as the first bottom wall 41 in the short side direction. The second bottom wall 42 is arranged in a standing condition from one end portion, in the long side direction, of the first bottom wall 41. The first bottom wall 41 and the second bottom wall 42 are coupled to each other such that they are orthogonal to each other. The pair of side walls 43 and 44 are each formed substantially in an L shape when viewed from the side, and are each arranged in a standing condition along both edge portions, in the short side direction, of the first bottom wall 41 and the second bottom wall 42.

When the cloth feed mechanism 12 is attached to the mounting surface 2A of the base portion 2, the mounting member 40 is oriented such that the first bottom wall 41 is on the bottom surface side and the second bottom wall 42 is vertical. A motor drive portion 50 is placed on an upper surface of the first bottom wall 41 and fixed with screws such that, in the cloth feed mechanism 12, a third motor 14 is closer to the second bottom wall 42 than a portion supporting the lower roller 13. The cloth feed mechanism 12 is oriented such that the lower roller 13 is in an upper position. An outer surface of the second bottom wall 42 is fixed to the mounting surface 2A of the base portion 2 using screws. The lower roller 13 faces the upper roller 18, and their surfaces come into contact with each other. As shown in FIG. 1, the attachment of the cloth feed mechanism 12 to the cloth bonding apparatus 1 is complete.

There are cases in which an operator wants to change the position in the left-right direction of the lower roller 13 with respect to the upper roller 18, depending on a bonding position etc. of the cloths. The cloth bonding apparatus 1 can adjust the position of the lower roller 13 with respect to the upper roller 18 in the left-right direction, by changing the position of the cloth feed mechanism 12 with respect to the first bottom wall 41 of the mounting member 40. As will be explained later, the third motor 14 that drives the lower roller 13 is assembled to the cloth feed mechanism 12. Therefore, it is possible to easily change the position of the cloth feed mechanism 12 together with the third motor 14, without changing the structure by which the power of the third motor 14 is transmitted to the lower roller 13.

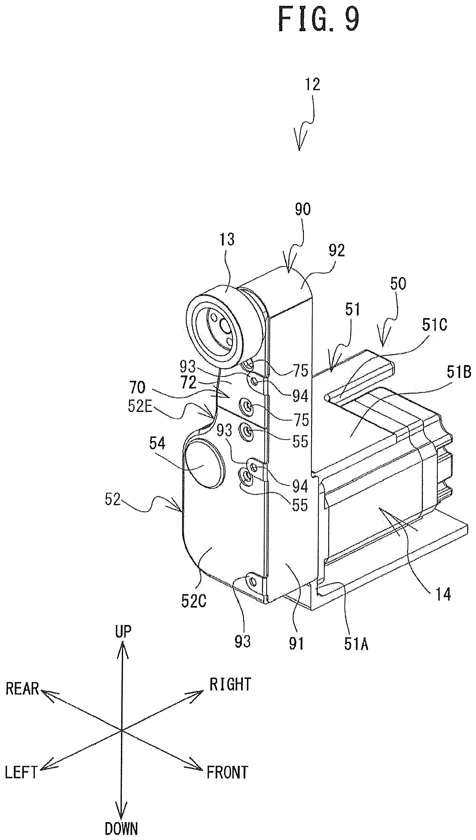

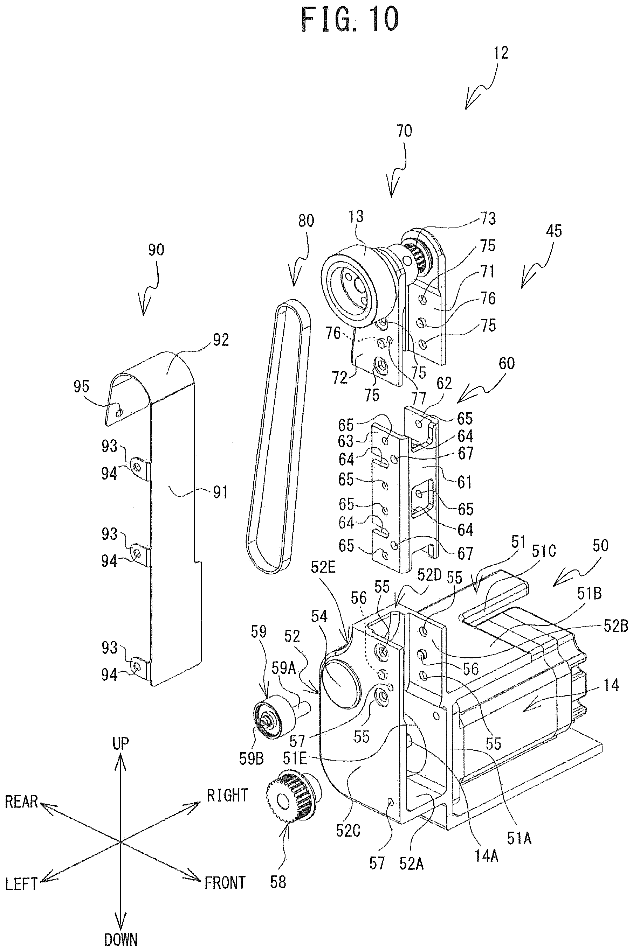

A structure of the cloth feed mechanism 12 will be explained with reference to FIG. 9 and FIG. 10. As shown in FIG. 9, the cloth feed mechanism 12 has a substantially L shape when viewed from the front. A section that stores the third motor 14 extends in the left-right direction, and a section that supports the lower roller 13 extends in the up-down direction. The cloth feed mechanism 12 is a column type cloth feed mechanism that supports the lower roller 13 on the left side of the cloth feed mechanism 12. As shown in FIG. 10, the cloth feed mechanism 12 is provided with a main body portion 45, a belt 80 and a cover 90 etc. The main body portion 45 extends in the up-down direction and is provided, in order from the bottom upward, with the motor drive portion 50, a coupling block 60 and the roller support portion 70.

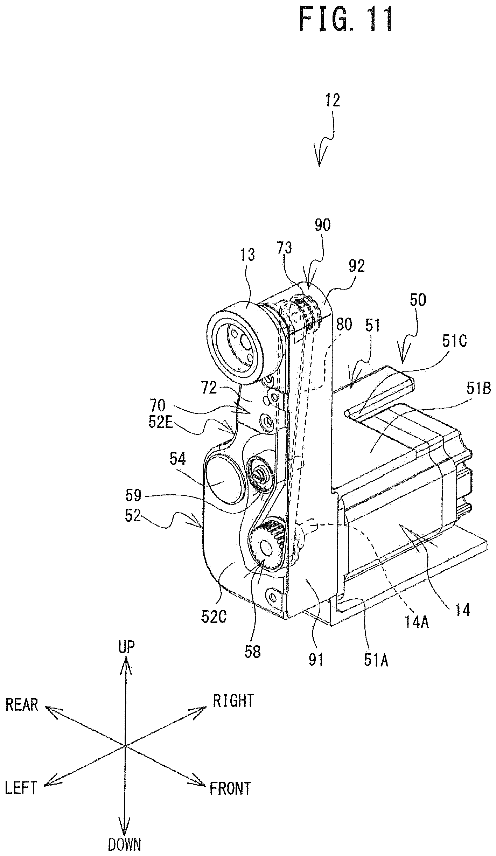

The motor drive portion 50 is a drive portion that stores the third motor 14. The motor drive portion 50 is provided with the third motor 14, a first storage portion 51, a second storage portion 52, a first pulley 58, a tension pulley 59 and the like. The first storage portion 51 is a substantially cuboid box body that is made of metal, and each of the front surface and the right side surface has an opening. The first storage portion 51 is provided with a left wall 51A and an upper wall 51B, and internally stores the third motor 14. The third motor 14 is fixed to the inside surface of the left wall 51A of the first storage portion 51. The left wall 51A has a hole 51E. An output shaft 14A of the third motor 14 protrudes into the inside of the second storage portion 52 through the hole 51E of the left wall 51A. The first pulley 58 is fixed to a leading end of the output shaft 14A of the third motor 14. The first pulley 58 rotates integrally with the output shaft 14A (refer to FIG. 11). The upper wall 51B of the first storage portion 51 has a cut out portion 51C in its front right corner portion, and has an L shape in a plan view.

The second storage portion 52 is coupled to the left wall 51A of the first storage portion 51. The second storage portion 52 is a substantially cuboid box body that is made of metal, and each of the front surface and the upper surface has an opening. The second storage portion 52 is provided with a peripheral wall 52A, a right wall 52B and a left wall 52C. The peripheral wall 52A is formed by a bottom wall and a rear wall being coupled together in a substantially arc shape. The bottom wall is substantially parallel to the front-rear direction, and the rear wall is substantially parallel to the up-down direction. The peripheral wall 52A is orthogonal to the left wall 51A of the first storage portion 51. The right wall 52B is coupled to an upper end portion of the left wall 51A of the first storage portion 51, in substantially the same plane. The left wall 52C is connected to the left end of the peripheral wall 52A and is orthogonal to the peripheral wall 52A. The upper end of the peripheral wall 52A, the upper end of the right wall 52B and the upper end of the left wall 52C form an opening 52D that is substantially U-shaped in a plan view. The peripheral wall 52A has a curved surface 52E in the vicinity of the upper end portion of the peripheral wall 52A. The curved surface 52E is gently curved in an arc shape toward the front, from the lower side to the upper side of the peripheral wall 52A. In the second storage portion 52, it is therefore possible to make the periphery of the opening 52D thinner.

The right wall 52B is provided with two fixing holes 55 and one locking pin 56. The two fixing holes 55 are provided, respectively, in upper and lower sections of the right wall 52B. The locking pin 56 is provided in a central position between the two upper and lower fixing holes 55, on an inner surface of the right wall 52B. The locking pin 56 protrudes toward the inside of the second storage portion 52. The left wall 52C is provided with two of the fixing holes 55 and one of the locking pins 56 having the same shape as those of the right wall 52B, on an upper portion and in the vicinity of a front end portion of the left wall 52C. The two fixing holes 55 and the locking pin 56 of the left wall 52C respectively correspond to positions of the two fixing holes 55 and the locking pin 56 of the right wall 52B. The left wall 52C is provided with two cover fixing holes 57 and a blocking portion 54. The cover fixing holes 57 are provided respectively on an upper portion and a lower portion on the front end portion side of the left wall 52C. The blocking portion 54 is a disc-shaped member that is provided on the left wall 52C, in the vicinity of the curved surface 52E of the peripheral wall 52A. The blocking portion 54 blocks a circular hole that opens in the left wall 52C. The above-mentioned first pulley 58 is positioned inside the second storage portion 52.

The tension pulley 59 is rotatably provided inside the second storage portion 52 in a position corresponding to the blocking portion 54. The tension pulley 59 is positioned above the first pulley 58. A pivotal shaft of the tension pulley 59 has an eccentric shaft 59A on a right end portion of the pivotal shaft. The axis center of the eccentric shaft 59A is displaced from the axis center of the pivotal shaft of the tension pulley 59. The right wall 52B rotatably supports the eccentric shaft 59A. A left end portion of the pivotal shaft of the tension pulley 59 has a groove 59B. The groove 59B is a groove that is recessed in a left end surface of the pivotal shaft of the tension pulley 59 in the axial direction. A jig can be inserted to the groove 59B. The operator removes the blocking portion 54 from the left wall 52C, and inserts the jig through the hole as far as the groove 59B. When the operator rotates the jig, the tension pulley 59 swings around the eccentric shaft 59A and the position of the tension pulley 59 is changed. Since the position of the tension pulley 59 is changed, it is possible to adjust the tension to be applied to the belt 80. A positional relationship between the tension pulley 59 and the belt 80 will be explained later.

A structure of the coupling block 60 will be explained. The coupling block 60 has a substantially U shape in a plan view and is made of metal. The coupling block 60 is provided with a bottom wall 61 and a pair of side walls 62 and 63, and is open to the rear and in the up and down directions, respectively. The bottom wall 61 is a substantially rectangular shaped plate member and the long sides extend in the up-down direction. The bottom wall 61 has cut-out portions that are respectively cut out toward the inside at both end portions in the long side direction. The bottom wall 61 has an opening in a central portion in the long side direction. The side walls 62 and 63 are provided such that they extend toward the rear from both end portions, in the short side direction, of the bottom wall 61. Each of the side walls 62 and 63 is a substantially rectangular plate-shaped member and the long sides of each of the side walls 62 and 63 extend in the up-down direction. Each of the side walls 62 and 63 is provided with four fixing holes 65 and two locking grooves 64. The four fixing holes 65 are aligned in the long side direction of each of the side walls 62 and 63 and are arranged at substantially equal intervals. The locking grooves 64 are respectively provided between the first and the second, from the top, of the four fixing holes 65, and between the first and the second, from the bottom, of the four fixing holes 65. The locking grooves 64 extend substantially horizontally from the rear ends of the side walls 62 and 63 toward the front. The side wall 63 is provided with two cover fixing holes 67. The cover fixing holes 67 are respectively provided on an upper portion and a lower portion on the front end portion side of the side wall 63.

A structure of the roller support portion 70 will be explained. The roller support portion 70 is a component that supports the lower roller 13 on the left side of the upper end of the roller support portion 70. The roller support portion 70 is provided with a right wall 71, a left wall 72, a second pulley 73 and the lower roller 13 etc. Each of the right wall 71 and the left wall 72 is a metal plate having a substantially trapezoidal shape in a side view, and an upper side thereof is arc-shaped. The right wall 71 and the left wall 72 are disposed with a predetermined interval between them. A side wall is installed between one end portion (the rear end portion) of the right wall 71 in the short side direction and one end portion (the rear end portion) of the left wall 72 in the short side direction. The right wall 71, the left wall 72 and the side wall form a support member having a substantial U-shape. The second pulley 73 is rotatably supported between the upper portion of the right wall 71 and the upper portion of the left wall 72. The left side of the upper portion of the left wall 72 rotatably supports the lower roller 13 coaxially with the second pulley 73. The lower roller 13 rotates integrally with the second pulley 73.

The right wall 71 is provided with two fixing holes 75 and a locking pin 76. The two fixing holes 75 are respectively provided in a central portion and a lower portion of the right wall 71. The locking pin 76 is provided in a position between the two upper and lower fixing holes 75, on an inner surface of the right wall 71. The locking pin 76 protrudes toward the left wall 72. The left wall 72 is provided with two of the fixing holes 75 and one of the locking pins 76 having the same shape as those of the right wall 71. The two fixing holes 75 and the locking pin 76 of the left wall 72 respectively correspond to positions of the two fixing holes 75 and the locking pin 76 of the right wall 71. The left wall 72 is further provided with a cover fixing hole 77. The cover fixing hole 77 is provided between the locking pin 76 and the upper side fixing hole 75, and on the front end portion side of the left wall 72.

A structure of the belt 80 and the cover 90 will be explained. The belt 80 is an endless timing belt and is formed of synthetic resin or the like. The belt 80 is disposed inside the main body portion 45. An inner side surface of the belt 80 is provided with a toothed portion. The toothed portion meshes with a toothed portion that is formed on a rolling contact surface of the first pulley 58 and a toothed portion that is formed on a rolling contact surface of the second pulley 73. The belt 80 may be an endless belt that is not provided with the toothed portion on the inner side surface.

The cover 90 is a metal plate and is provided with a planar portion 91 and an arc portion 92. The planar portion 91 is a plate having a rectangular shape, in a front view, and is long in the up-down direction. The arc portion 92 is a portion originally having a rectangular plate shape and is curved upward in an arc shape toward the rear from an upper end portion of the planar portion 91. A left end portion of the planar portion 91 is provided with three fixing tabs 93. The three fixing tabs 93 are arranged at substantially equal intervals, respectively. Each of the three fixing tabs 93 is a plate piece that protrudes to the rear. Each of the fixing tabs 93 is provided with a through hole 94 in the center of the fixing tab 93. Positions of the through holes 94 respectively correspond to positions of the cover fixing holes 57, 67 and 77. An attachment hole 95 is provided in the vicinity of a left corner portion on the rear end portion of the arc portion 92.

A coupling structure of the cloth feed mechanism 12 will be explained with reference to FIG. 9 and FIG. 10. The coupling block 60 is in a state in which the coupling block 60 opens rearward so that the inside surface of the coupling block 60 is oriented toward the rear. Substantially the lower half of the coupling block 60 passes through the opening in the upper surface of the second storage portion 52 and is positioned inside the motor drive portion 50. The locking pin 56 of the right wall 52B of the second storage portion 52 locks the lower side locking groove 64 of the side wall 62 of the coupling block 60. The locking pin 56 of the left wall 52C of the second storage portion 52 locks the lower side locking groove 64 of the side wall 63 of the coupling block 60. The two fixing holes 55 of the right wall 52B of the second storage portion 52 respectively face the two lower side fixing holes 65 (not shown in FIG. 10) of the side wall 62 of the coupling block 60. The two fixing holes 55 of the left wall 52C respectively face the two lower side fixing holes 65 of the side wall 63 of the coupling block 60. Each of the fixing holes 55 and each of the fixing holes 65 can be fastened using screws. With the above-described structure, the coupling block 60 and the second storage portion 52 are coupled together. In the state in which the coupling block 60 and the second storage portion 52 are coupled together, of the two cover fixing holes 57 of the left wall 52C, the upper side cover fixing hole 57 faces the lower side cover fixing hole 67 of the side wall 63 of the coupling block 60.

Substantially the top half of the coupling block 60 is positioned inside the roller support portion 70. The lower portion of the roller support portion 70 comes into contact with the upper portion of the second storage portion 52. The locking pin 76 of the right wall 71 of the roller support portion 70 locks the upper side locking groove 64 of the side wall 62 of the coupling block 60. The locking pin 76 of the left wall 72 of the roller support portion 70 locks the upper side locking groove 64 of the side wall 63 of the coupling block 60. The two fixing holes 75 of the right wall 71 respectively face the two upper side fixing holes 65 of the side wall 62 of the coupling block 60. The two fixing holes 75 of the left wall 72 respectively face the two upper side fixing holes 65 of the side wall 63 of the coupling block 60. Each of the fixing holes 75 and each of the fixing holes 65 can be fastened using screws. With the above-described structure, the roller support portion 70 and the coupling block 60 are coupled together. In the state in which the roller support portion 70 and the coupling block 60 are coupled together, the cover fixing hole 77 of the left wall 72 faces the upper side cover fixing hole 67 of the side wall 63 of the coupling block 60. With the above-described structure, the roller support portion 70 and the second storage portion 52 are coupled together via the coupling block 60.

When the motor drive portion 50, the coupling block 60 and the roller support portion 70 are coupled together, the cover 90 covers, from the front, open areas of each of the second storage portion 52 and the roller support portion 70. The through holes 94 of each of the two lower side fixing tabs 93 of the cover 90 respectively face the two cover fixing holes 57 of the left wall 52C of the second storage portion 52. Each of the through holes 94 and each of the cover fixing holes 57 can be fastened using screws. The through hole 94 of the uppermost fixing tab 93 of the cover 90 faces the cover fixing hole 77 of the left wall 72 of the roller support portion 70. The through hole 94 and the cover fixing hole 77 can be fastened using a screw. The attachment hole 95 that is provided on the rear end side of the cover 90 faces a fixing hole that is provided on a rear surface side of the arc-shaped upper portion of the left wall 72 of the roller support portion 70. The attachment hole 95 and the fixing hole can be fastened using a screws. With the above-described structure, the cover 90 can be fixed to the motor drive portion 50 and to the roller support portion 70.

Respective positional relationships of the output shaft 14A, the first pulley 58, the second pulley 73, the tension pulley 59 and the belt 80, and their operational effects, will be explained with reference to FIG. 11. In FIG. 11, the coupling block 60 disposed inside the cloth feed mechanism 12 is not shown. The output shaft 14A of the third motor 14 is disposed in a position that is displaced to the rear (this corresponds to a specific direction of the present invention), with respect to the planar portion 91 of the cover 90. The output shaft 14A is disposed in a position that is displaced to the rear with respect to a direction vertically below a pivotal shaft of the second pulley 73. The belt 80 is stretched between the first pulley 58 and the second pulley 73. The tension pulley 59 comes into contact with the outer side of the belt 80 in the vicinity of the opening 52D (refer to FIG. 10) of the second storage portion 52. When the third motor 14 is driven and the output shaft 14A is rotated, the belt 80 transmits the torque of the output shaft 14A to the second pulley 73. The second pulley 73 rotates. In accordance with the rotation of the second pulley 73, the lower roller 13 rotates and the tension pulley 59 comes into contact with the outer side of the belt 80 applies a tension to the belt 80. The cloth feed mechanism 12 can therefore inhibit the belt 80 from becoming slack, and the drive of the third motor 14 can be efficiently and reliably transmitted to the lower roller 13.

The tension pulley 59 is disposed such that it comes into contact with the outer side of the belt 80 on the rear side, which is the direction of displacement of the output shaft 14A with respect to the second pulley 73. As a result, between the first pulley 58 and the second pulley 73, the cloth feed mechanism 12 can cause the belt 80 on the front side to be close to the belt 80 on the rear side in the vicinity of the tension pulley 59. The side of the belt 80 on which the tension pulley 59 comes into contact with the belt 80 is substantially parallel to the planar portion 91 of the cover 90. As a result, it is possible to inhibit interference between the belt 80 and an opening end of the opening 52D of the second storage portion 52. Furthermore, it is possible to cause the belt 80 on the front side to be close to the belt 80 on the rear side in the vicinity of the opening 52D of the second storage portion 52. It is therefore possible to make both the upper portion of the second storage portion 52 and the roller support portion 70 thinner.

An exchange of the roller support portion 70 in the cloth feed mechanism 12 will be explained with reference to FIG. 9 to FIG. 13. The roller support portion 70 has another mode in which the position of the lower roller 13 is different. The other mode of the roller support portion 70 is a mode in which the position of the lower roller 13 is different with respect to a support portion of the lower roller 13, in an axial direction of a pivotal shaft of the lower roller 13. As described above, the cloth feed mechanism 12 has a structure in which the motor drive portion 50 and the roller support portion 70 can be separated from each other and coupled together. As a result, depending on the shape of the cloth to be fed, the operator can exchange only the roller support portion 70 with another roller support portion.

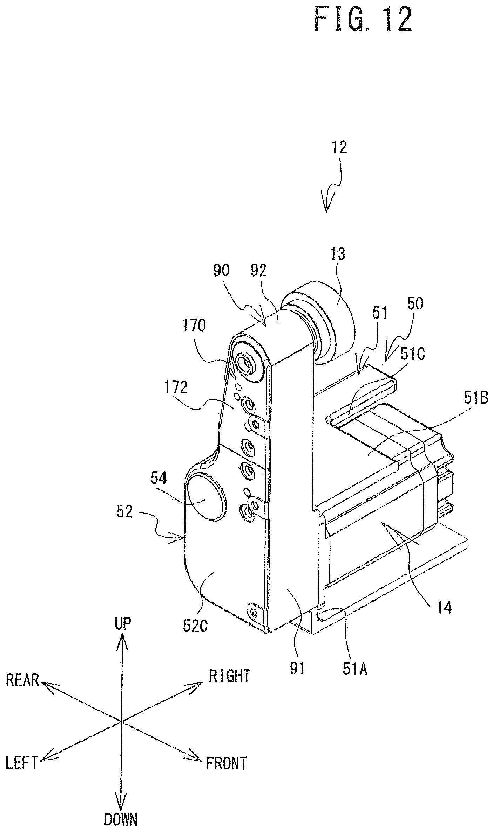

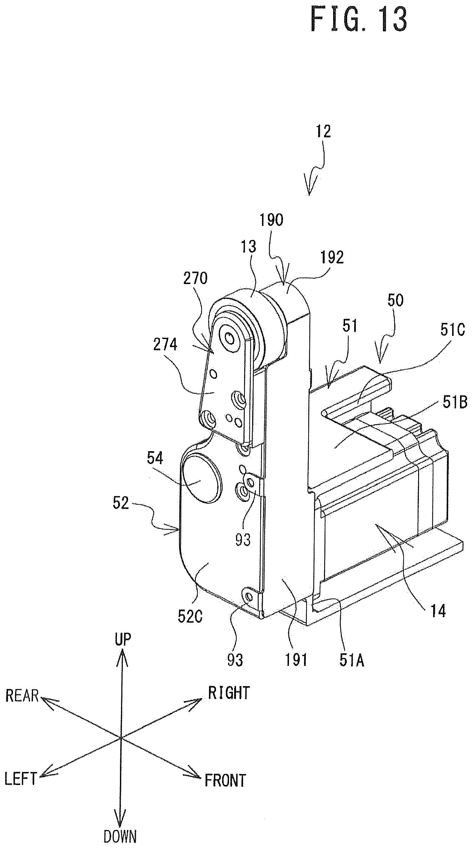

The upper portion of the cloth feed mechanism 12 shown in FIG. 9 has the roller support portion 70, and the roller support portion 70 supports the lower roller 13 on the left side of the roller support portion 70. The upper portion of the cloth feed mechanism 12 shown in FIG. 12 has a roller support portion 170, and the roller support portion 170 supports the lower roller 13 on the right side of the roller support portion 170. The upper portion of the cloth feed mechanism 12 shown in FIG. 13 has a roller support portion 270, and the roller support portion 270 supports the lower roller 13 in a substantial center of the roller support portion 270 in the left-right direction. The roller support portions 170 and 270 are modifications of the roller support portion 70. Each of the three cloth feed mechanisms 12 shown in FIG. 9, FIG. 12 and FIG. 13 commonly uses the motor drive portion 50, the coupling block 60 and the belt 80.

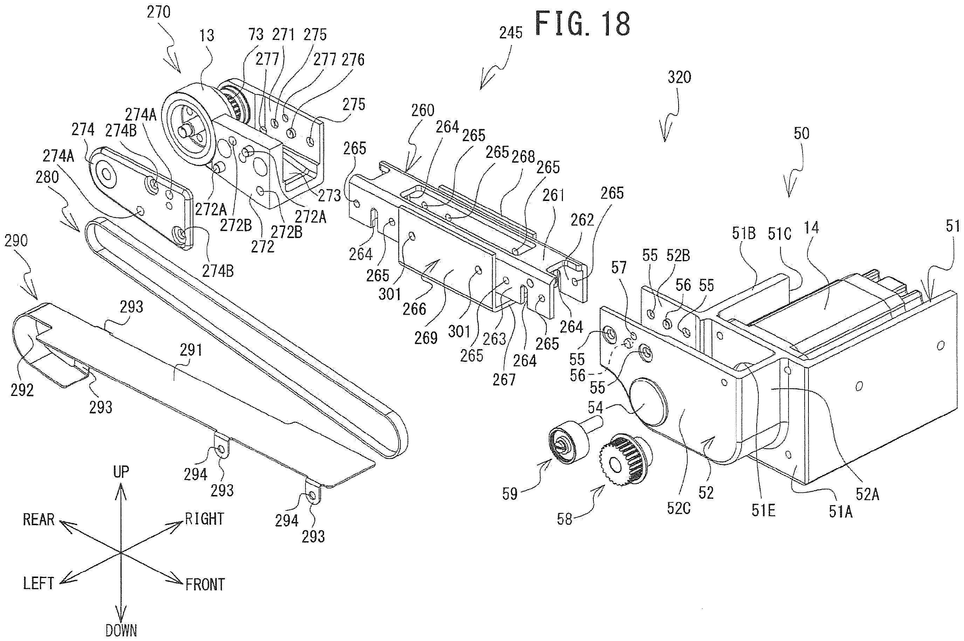

Similarly to the roller support portion 70 shown in FIG. 10, the roller support portion 170 of the cloth feed mechanism 12 shown in FIG. 12 is provided with a right wall, a left wall 172, a second pulley and the lower roller 13 etc. The roller support portion 170 only differs from the roller support portion 70 in that the lower roller 13 is rotatably disposed on the right side of the upper portion of the right wall of the roller support portion 170. The lower roller 13 is provided coaxially with the second pulley, and rotates integrally with the second pulley. Similarly to the roller support portion 70 shown in FIG. 10, the roller support portion 270 of the cloth feed mechanism 12 shown in FIG. 13 is provided with a right wall, a left outer wall 274, a second pulley and the lower roller 13 etc. However, the roller support portion 270 differs from the roller support portion 70 in having a configuration in which the lower roller 13 is supported substantially in a center of the right wall and the left outer wall 274. The roller support portion 270 is the same as the roller support portion 270 of a cloth feed mechanism 320 shown in FIG. 18. A specific structure of the roller support portion 270 will be explained later.

The cloth feed mechanism 12 shown in FIG. 13 is provided with a cover 190 in place of the cover 90 shown in FIG. 9 and FIG. 12. The cover 190 is a metal plate and is provided with a planar portion 191 and an arc portion 192. The planar portion 191 is a plate having a rectangular shape, in a front view, and is long in the up-down direction. A top left end portion of the planar portion 191 is cut out toward the right. The arc portion 192 is a portion originally having a rectangular plate shape and is curved in an arc shape toward the rear from an upper end portion of the planar portion 191. Apart from being provided with the planar portion 191 and the arc portion 192, the cover 190 has the same configuration as the cover 90 and an explanation thereof is thus omitted here.

For example, when bonding two normal cloths together for which a bonding surface forms a flat shape after bonding, the cloth feed mechanism 12 that is coupled to the roller support portion 270 shown in FIG. 13 may be used. When bonding two cloths for which the bonding surface forms a curved surface after bonding, the roller support portion 70 shown in FIG. 9 or the roller support portion 170 shown in FIG. 12 may be used. There is a case in which a tubular section of a cloth, such as a sleeve of a shirt, is to be bonded to another cloth using adhesive. The roller support portions 70 and 170 support the lower roller 13 that protrudes to the left or to the right. By inserting the lower roller 13 into the tubular section of the cloth, the operator can adhere the other cloth while rotating the tubular section. As described above, in the cloth feed mechanism 12 of the present embodiment, the operator may exchange only the roller support portion 70 for another roller support portion, such as the roller support portions 170 and 270, depending on the shape of the cloths to be bonded. As a result, the motor drive portion 50, the coupling block 60 and the belt 80 etc. can be commonly used in the cloth feed mechanism 12. With the present embodiment, there is no need to prepare the individual cloth feed mechanism 12 in accordance with the position of the lower roller 13, and it is thus possible to reduce manufacturing costs.

Further, the cloth feed mechanism 12 of the present embodiment is provided with the structure in which the motor drive portion 50 and the roller support portion 70 can be separated from each other and coupled together, and thus, if either the motor drive portion 50 or the roller support portion 70 is damaged, it is sufficient to only replace the damaged component with a new component. The cloth feed mechanism 12 can be continuously used by replacing only the damaged component with the new component, and thus the operator can rapidly re-start operations. Even when a part of the cloth feed mechanism 12 fails, there is no need to replace all of the cloth feed mechanism 12 and thus costs relating to maintenance fees etc. can be reduced.

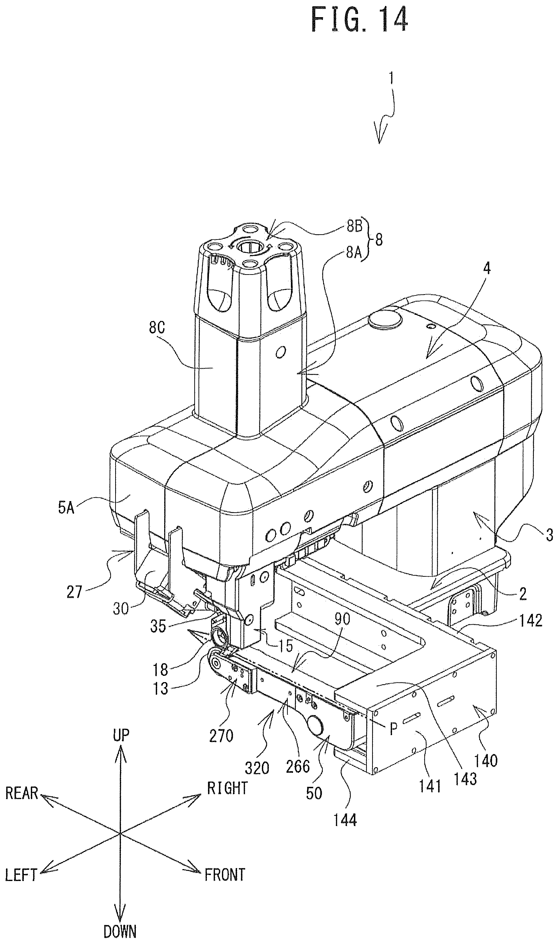

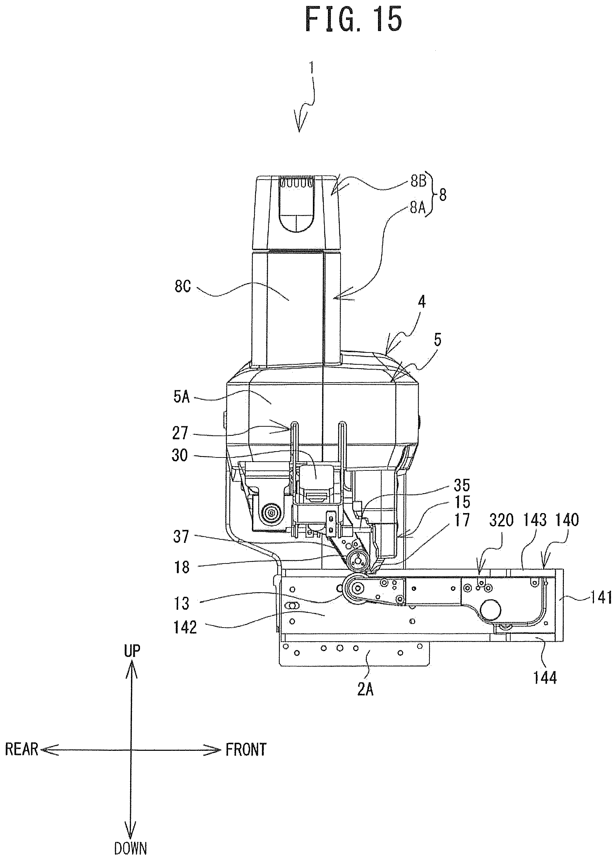

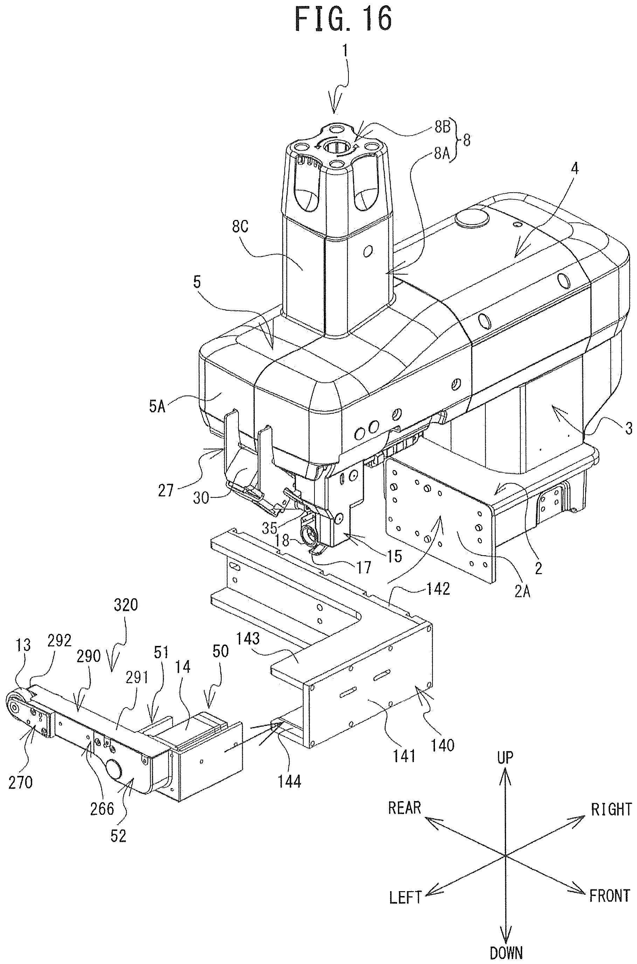

The cloth bonding apparatus 1 that is provided with the cloth feed mechanism 320 will be explained with reference to FIG. 14 and FIG. 15. In the cloth bonding apparatus 1, in addition to the cloth feed mechanism 12 shown in FIG. 1, the cloth feed mechanism 320 can be mounted on the mounting surface 2A (refer to FIG. 16) of the base portion 2. The cloth feed mechanism 320 is a so-called "arm type" in which the lower roller 13, which is disposed facing the upper roller 18, is supported substantially horizontally from the upstream side in the cloth feed direction. The arm type cloth feed mechanism 320 is preferably used when, for example, the cloths that will form a cylindrical shape after they are bonded together are bonded while the cloths are being fed substantially in the horizontal direction. The cloth feed mechanism 320 can commonly use the motor drive portion 50 and the roller support portions 70, 170 and 270 of the cloth feed mechanism 12 shown in FIG. 10 to FIG. 13. The structures of the base portion 2, the pillar portion 3, the arm portion 4 and the head portion 5 of the cloth bonding apparatus 1 are the same as those described above, and an explanation thereof is omitted here.

As shown in FIG. 14 and FIG. 15, the cloth feed mechanism 320 is mounted on the mounting surface 2A of the base portion 2, using the mounting member 140. The cloth feed mechanism 320 can be mounted on and removed from the mounting member 140. The lower roller 13 faces the upper roller 18. The axial direction of the upper roller 18 and the axial direction of the lower roller 13 are parallel to the left-right direction of the cloth bonding apparatus 1. The cloth feed mechanism 320 drives and rotates the lower roller 13, and the lower roller 13 feeds the cloths from the front side toward the rear side in cooperation with the upper roller 18. The cloth feed direction is the direction from the front side to the rear side of the cloth bonding apparatus 1 (a direction indicated by an arrow of a two-dot chain line P in FIG. 14). The nozzle 17 is positioned on the upstream side in the cloth feed direction with respect to a contact portion at which the upper roller 18 and the lower roller 13 are in contact with each other.

A structure of the mounting member 140 will be explained with reference to FIG. 16. Similarly to the mounting member 40 shown in FIG. 8, the mounting member 140 is a metal member that is formed substantially in a U shape when viewed from the left side, and is formed substantially in an L shape in a plan view, as in FIG. 16. The mounting member 140 is provided with a first bottom wall 141, a second bottom wall 142 and a pair of side walls 143 and 144. The first bottom wall 141 is a rectangular plate-shaped member and is the same shape as the first bottom wall 41. The second bottom wall 142 is a rectangular plate-shaped member having the same length as the first bottom wall 141 in the short side direction. The second bottom wall 142 is arranged in a standing condition from one end portion, in the long side direction, of the first bottom wall 141. The second bottom wall 142 is longer, in the long side direction, than the second bottom wall 42 shown in FIG. 8. The pair of side walls 143 and 144 are each formed substantially in an L shape in a plan view, and are each arranged in a standing condition along both edge portions, in the short side direction, of the first bottom wall 141 and the second bottom wall 142.

When the cloth feed mechanism 320 is attached to the mounting surface 2A of the base portion 2, the mounting member 140 is in a horizontal state in which an outer surface of the first bottom wall 141 is toward the front and an outer surface of the second bottom wall 142 is toward the right. In the cloth feed mechanism 320, the motor drive portion 50 is fixed by screws to the inner surface of the first bottom wall 141 such that the third motor 14 is disposed further to the second bottom wall 142 side than the section that supports the lower roller 13. The cloth feed mechanism 320 is oriented such that the lower roller 13 is positioned to the rear. The outer surface of the second bottom wall 142 is fixed by screws to the mounting surface 2A of the base portion 2. The lower roller 13 faces the upper roller 18 and their surfaces are in contact with each other. As shown in FIG. 14, the attachment of the cloth feed mechanism 320 to the cloth bonding apparatus 1 is complete.

There are cases in which the operator wants to change the position in the left-right direction of the lower roller 13 with respect to the upper roller 18, depending on a bonding position etc. of the cloths. The cloth bonding apparatus 1 can adjust the position of the lower roller 13 with respect to the upper roller 18 in the left-right direction, by changing the position of the cloth feed mechanism 320 with respect to the first bottom wall 141 of the mounting member 140. The third motor 14 that drives the lower roller 13 is assembled to the cloth feed mechanism 320. Therefore, it is possible to easily change the position of the cloth feed mechanism 320 together with the third drive motor 14, without changing the structure by which the power of the third drive motor 14 is transmitted to the lower roller 13.

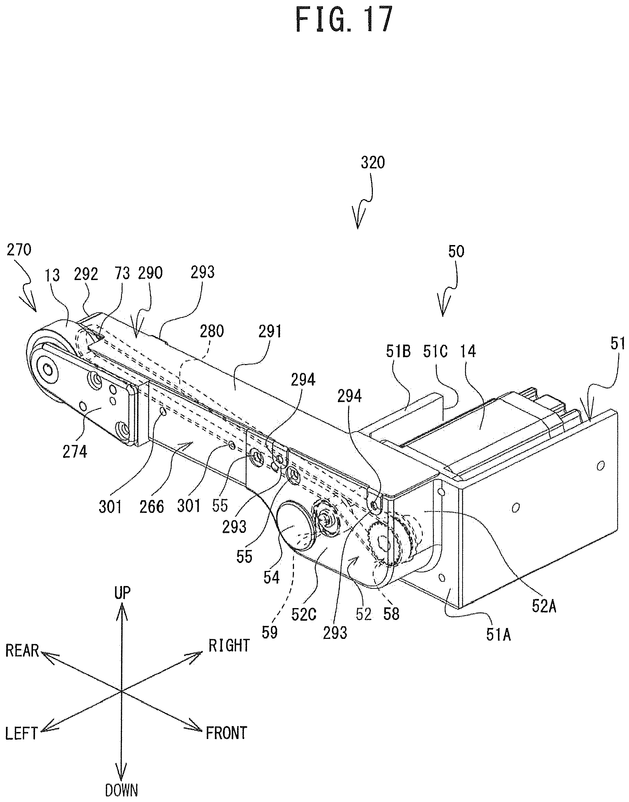

A structure of the cloth feed mechanism 320 will be explained with reference to FIG. 17 and FIG. 18. As shown in FIG. 17, the cloth feed mechanism 320 has a substantially L shape in a plan view. A section that stores the third motor 14 extends in the left-right direction, and a section that supports the lower roller 13 extends in the front-rear direction. As shown in FIG. 18, the cloth feed mechanism 320 is provided with a main body portion 245, a belt 280 and a cover 290 etc. The main body portion 245 extends in the front-rear direction and is provided, in order from the front, with the motor drive portion 50, a coupling block 260, a joint block 266 and the roller support portion 270. The structure of the motor drive portion 50 is the same as that of the motor drive portion 50 of the cloth feed mechanism 12 shown in FIG. 9, and only an orientation of the motor drive portion 50 is different. An explanation thereof is therefore omitted.

A structure of the coupling block 260 and a structure of the joint block 266 will be explained. As shown in FIG. 18, the coupling block 260 has a substantially U shape and is made of metal. The coupling block 260 is longer, in the long side direction, than the coupling block 60 shown in FIG. 10. The coupling block 260 is provided with a bottom wall 261 and a pair of side walls 262 and 263 and is open in the downward and front and rear directions, respectively. The bottom wall 261 has cut-out portions that are respectively cut out toward the inside at both end portions in the long side direction. The bottom wall 261 has an opening in a central portion in the long side direction. The side wall 262 is positioned on the right side of the bottom wall 261 and the side wall 263 is positioned on the left side. The side walls 262 and 263 are provided such that they extend toward the bottom from both end portions, in the short side direction, of the bottom wall 261. Each of the side walls 262 and 263 is a substantially rectangular plate-shaped member and the long sides of each of the side walls 262 and 263 extend in the front-rear direction. Each of the side walls 262 and 263 is provided with six fixing holes 265 and two locking grooves 264. The six fixing holes 265 are aligned in the long side direction of each of the side walls 262 and 263. The locking grooves 264 are respectively provided between the first and the second, from the front, of the six fixing holes 265, and between the first and the second, from the rear, of the six fixing holes 265. The locking grooves 264 extend upward from the lower ends of the side walls 262 and 263, respectively.

The joint block 266 has a substantially U shape and is made of metal. A length of the joint block 266 in the long side direction is substantially half the length of the coupling block 260, and the joint block 266 has a size that allows the coupling block 260 to be stored inside the joint block 266. The joint block 266 is provided with a bottom wall 267 and a pair of side walls 268 and 269, and is open in the upward direction and in the front and rear directions. The side wall 268 is positioned on the right side of the bottom wall 267 and the side wall 269 is on the left side. The side walls 268 and 269 are provided in a standing manner on both end portions, in the short side direction, of the bottom wall 267. Each of the side walls 268 and 269 is provided with two fixing holes 301 (in FIG. 18, only the fixing holes 301 of the side wall 269 are shown). When the cloth feed mechanism 320 is assembled, the inside of the coupling block 260 that is open is oriented downward and the inside of the joint block 266 that is open is oriented upward. By inserting the coupling block 260 inside the joint block 266, the joint block 266 is in a state of enveloping the coupling block 260 from below.

A structure of the roller support portion 270 will be explained with reference to FIG. 18. The roller support portion 270 is a component that supports the lower roller 13 substantially in the center, in the left-right direction, of the roller support portion 270. The roller support portion 270 is provided with a right wall 271, a left wall 272, a side wall 273, the left outer wall 274, the second pulley 73 and the lower roller 13 etc. The second pulley 73 and the lower roller 13 are the same as the second pulley 73 and the lower roller 13 shown in FIG. 10. Each of the right wall 271 and the left wall 272 is a metal plate that has a substantially trapezoidal shape in a side view, and the right wall 271 and the left wall 272 are disposed with a predetermined interval between them. A rear end portion of the left wall 272 is positioned further to the front than a rear end portion of the right wall 271. The side wall 273 is installed between one end portion of the right wall 271 in the short side direction and one end portion of the left wall 272 in the short side direction. The right wall 271, the left wall 272 and the side wall 273 form a support member having a substantially U shape.

The outer surface of the left wall 272 is provided with two left outer wall locking pins 272A and two left outer wall fixing holes 272B. The left outer wall 274 is a metal plate having a substantially trapezoidal shape in a side view, and is substantially the same shape as the right wall 271. The left outer wall 274 is provided with two locking holes 274A and two fixing holes 274B. The two locking holes 274A and the two fixing holes 274B respectively correspond to positions of the two left outer wall locking pins 272A and the two left outer wall fixing holes 272B. By inserting the two left outer wall locking pins 272A of the left wall 272 into the two locking holes 274A of the left outer wall 274, it is possible to align the positions of the two fixing holes 274B of the left outer wall 274 and the two left outer wall fixing holes 272B of the left wall 272. The left outer wall 274 can be fixed to the left wall 272 by fastening screws in each of the two fixing holes 274B and the two left outer wall fixing holes 272B.

The lower roller 13 and the second pulley 73 are coaxially and rotatably supported between the rear end portion of the right wall 271 and the rear end portion of the left outer wall 274. The lower roller 13 is disposed on the left outer wall 274 side and the second pulley 73 is disposed on the right wall 271 side. The lower roller 13 is positioned further to the rear than the rear end portion of the left wall 272. The lower roller 13 rotates integrally with the second pulley 73. When the left outer wall 274 is removed from the left wall 272, the lower roller 13 and the second pulley 73 can be removed from the position between the rear end portion of the right wall 271 and the rear end portion of the left outer wall 274.

The right wall 271 is provided with two fixing holes 275 and a locking pin 276. The two fixing holes 275 are provided such that they are separated from each other in the long side direction of the right wall 271. The locking pin 276 is provided in a position between the two front and rear fixing holes 275, on the inner surface of the right wall 271. The locking pin 276 protrudes toward the left wall 272. The right wall 271 is provided with two cover fixing holes 277. One of the cover fixing holes 277 is provided between the locking pin 276 and the rear end side fixing hole 275 and on the upper end portion side of the right wall 271. The other cover fixing hole 277 is provided to the rear of the rear end side fixing hole 275 and on the lower end portion side of the right wall 271. A locking pin having the same shape as that of the right wall 271 is provided on the inner surface of the left wall 272. The locking pin (not shown) of the left wall 272 corresponds to a position of the locking pin 276 of the right wall 271.

A structure of the belt 280 and the cover 290 will be explained with reference to FIG. 18. Similarly to the belt 80 shown in FIG. 10, the belt 280 is an endless timing belt and is longer than the belt 80. The belt 280 is disposed inside the main body portion 245. The cover 290 is a metal plate and is provided with a planar portion 291 and an arc portion 292. The planar portion 291 is a plate having a rectangular shape, in a plan view, and is substantially horizontal and long in the front-rear direction. A rear left end portion of the planar portion 291 is cut out toward the right. The arc portion 292 is a portion originally having a rectangular plate shape and is curved in an arc shape downward from a rear end portion of the planar portion 291. The front side of the left end portion of the planar portion 291 is provided with two of fixing tabs 293 and the rear side of the right end portion of the planar portion 291 is provided with one of the fixing tabs 293. A right corner portion on the leading end side of the arc portion 292 is provided with one of the fixing tabs 293. Each of the fixing tabs 293 is a plate piece. Each of the fixing tabs 293 of the planar portion 291 protrudes downward. The fixing tab 293 of the arc portion 292 protrudes upward. Each of the fixing tabs 293 is provided with a through hole 294 in the center of the fixing tab 293. Positions of the through holes 294 respectively correspond to positions of the cover fixing holes 57 and 277.

A coupling structure of the cloth feed mechanism 320 will be explained with reference to FIG. 18. The motor drive portion 50 is oriented such that the open sides of the first storage portion 51 are oriented toward the upside and the right side, and the open sides of the second storage portion 52 are oriented toward the upside and the rear side. In a state in which the coupling block 260 opens downward so that the inside surface of the coupling block 260 is oriented downward, a section that is substantially one third of the front side of the coupling block 260 passes through the opening of the rear surface of the second storage portion 52 and is positioned inside the motor drive portion 50. The locking pin 56 of the right wall 52B of the second storage portion 52 locks the front side locking groove 264 of the side wall 262 of the coupling block 260. The locking pin 56 of the left wall 52C of the second storage portion 52 locks the front side locking groove 264 of the side wall 263 of the coupling block 260. The two fixing holes 55 of the right wall 52B of the second storage portion 52 respectively face the first and second fixing holes 265 (only one is shown in FIG. 18) from the front side of the side wall 262 of the coupling block 260. The two fixing holes 55 of the left wall 52C respectively face the first and second fixing holes 265 from the front of the side wall 263 of the coupling block 260. Each of the fixing holes 55 and each of the fixing holes 265 can be fastened using screws. With the above-described structure, the coupling block 260 and the second storage portion 52 are coupled together.

A section that is substantially one third of the rear side of the coupling block 260 is positioned inside the roller support portion 270. The locking pin 276 of the right wall 271 of the roller support portion 270 locks the rear side locking groove 264 of the side wall 262 of the coupling block 260. The locking pin of the left wall 272 of the roller support portion 270 locks the rear side locking groove 264 of the side wall 263 of the coupling block 260. The two fixing holes 275 of the right wall 271 respectively face the first and second fixing holes 265 (only one is shown in FIG. 18) from the rear side of the side wall 262 of the coupling block 260. Each of the fixing holes 275 and each of the fixing holes 265 can be fastened using screws. With the above-described structure, the roller support portion 270 and the coupling block 260 are coupled together. With the above-described structure, the roller support portion 270 and the second storage portion 52 are coupled together via the coupling block 260.

The joint block 266 is disposed between the second storage portion 52 and the roller support portion 270. The front end portion of the joint block 266 comes into contact with the rear end portion of the second storage portion 52. The rear end portion of the joint block 266 comes into contact with the front end portion of the roller support portion 270. Two of the fixing holes 301 (not shown in FIG. 18) of the side wall 268 of the joint block 266 respectively face the two fixing holes 265 in the center (that is the third and fourth fixing holes 265 from the front side) of the side wall 262 of the coupling block 260. Two of the fixing holes 301 of the side wall 269 of the joint block 266 respectively face the two fixing holes 265 (not shown in FIG. 18) in the center of the side wall 263 of the coupling block 260. Each of the fixing holes 301 and each of the fixing holes 265 can be fastened using screws. With the above-described structure, the joint block 266 and the coupling block 260 are coupled together.

When the motor drive portion 50, the coupling block 260, the joint block 266 and the roller support portion 270 are coupled together, the cover 290 respectively covers, from above, open areas of the second storage portion 52, the coupling block 260, the joint block 266 and the roller support portion 270. The through holes 294 of the two left end side fixing tabs 293 of the cover 290 respectively face the two cover fixing holes 57 of the left wall 52C of the second storage portion 52. Each of the through holes 294 and each of the cover fixing holes 57 can be fastened using screws. A through hole of the right end side fixing tab 293 of the cover 290 faces the cover fixing hole 277 on the upper end side of the right wall 271 of the roller support portion 270. A through hole of the rear end side fixing tab 293 of the arc portion 292 of the cover 290 faces the rear end side cover fixing hole 277 of the right wall 271 of the roller support portion 270. Each of the through holes and each of the cover fixing holes 277 can be fastened using screws. With the above-described structure, the cover 290 can be fixed on the motor drive portion 50 and the roller support portion 270.

As shown in FIG. 17, positional relationships of each of the output shaft 14A, the first pulley 58, the second pulley 73, the tension pulley 59 and the belt 280 are the same as the positional relationships of the cloth feed mechanism 12 shown in FIG. 11. More specifically, the output shaft 14A of the third motor 14 is disposed in a position that is displaced downward (this corresponds to the specific direction of the present invention) with respect to the planar portion 291 of the cover 290. The output shaft 14A is disposed in a position that is displaced downward with respect to the horizontal direction of the pivotal shaft of the second pulley 73. The belt 280 is stretched between the first pulley 58 and the second pulley 73. The tension pulley 59 comes into contact with the outer side of the belt 280 in the vicinity of the opening 52D (refer to FIG. 10) of the second storage portion 52. Thus, it is possible for the cloth feed mechanism 320 to obtain the same above-described operational effects as the cloth feed mechanism 12. As described above, the roller support portion 270 and the rear portion of the second storage portion 52 can be made thinner, and thus, the joint block 266 that forms the connection between them can be made thinner. In the cloth feed mechanism 320, the tension pulley 59 of the motor drive portion 50 is disposed on the lower side in the motor drive portion 50. The cover 290 respectively covers, from above, the open areas of the second storage portion 52, the coupling block 260, the joint block 266 and the roller support portion 270, and thus the planar portion 291 of the cover 290 is positioned on the upper side in the cloth feed mechanism 320. The planar portion 291 extends substantially horizontally on the upstream side in the cloth feed direction of the lower roller 13. Thus, with the cloth feed mechanism 320, it is possible to place the sections for bonding of the cloths to be bonded on the planar portion 291 and bond the cloths in a stable manner.

The cloth feed mechanism 320 can be configured such that the coupling block 260 and the joint block 266 are coupled between the motor drive portion 50 and the roller support portion 270 (alternatively, the roller support portion 70, 170 etc.). Depending on the shape of the cloths to be bonded, the operator can change, as appropriate, the cloth feed mechanism 12 and the mounting member 40, and the cloth feed mechanism 320 and the mounting member 140. In the present embodiment, it is not necessary to individually manufacture the cloth feed mechanism depending on the cloth shape, and it is thus possible to reduce manufacturing costs. The cloth feed mechanism 320 has a simple structure in which the drive power of the third motor 14 is simply transmitted to the lower roller 13 using the belt 280. As a result, as only the belt 280 is housed inside the joint block 266 and the coupling block 260, it is possible to make the shape of the joint block 266 and the coupling block 260 thinner.

The leading end side of the cloth feed mechanism 320 has the roller support portion 270. However, similarly to the cloth feed mechanism 12, the roller support portion 270 can be exchanged with the roller support portions 70 and 170 that are the other modes. As a result, the cloth feed mechanism 320 can obtain similar effects to those of the cloth feed mechanism 12.

In the description above, the third motor 14 corresponds to a motor of the present invention. The lower roller 13 corresponds to a second roller of the present invention. The motor drive portion 50 corresponds to a first main body portion of the present invention. The roller support portions 70, 170 and 270 correspond to a second main body portion of the present invention. The coupling blocks 60 and 260 and the joint block 266 correspond to a joint portion of the present invention. The upper roller 18 corresponds to a first roller of the present invention. The belts 80 and 280 correspond to a transmission portion of the present invention.

As described above, the cloth feed mechanism 12 of the present embodiment can be attached to the cloth bonding apparatus 1. The cloth feed mechanism 12 faces the upper roller 18 on the downstream side in the cloth feed direction with respect to the nozzle 17 of the cloth bonding apparatus 1, and feeds the cloths to which the adhesive has been applied in a state in which the cloths are clamped and pressed between the cloth feed mechanism 12 and the upper roller 18. The cloth feed mechanism 12 is provided with the main body portion 45 and the belt 80 etc. The main body portion 45 is provided with the motor drive portion 50 and the roller support portion 70 etc. The motor drive portion 50 stores the third motor 14. The third motor 14 has the output shaft 14A that extends in a direction orthogonal to the long side direction of the cloth feed mechanism 12. The roller support portion 70 supports the lower roller 13. The lower roller 13 faces the upper roller 18. A transmission portion provided inside the cloth feed mechanism 12 transmits the power of the third motor 14 to the lower roller 13. The motor drive portion 50 and the roller support portion 70 can be separated from each other and coupled together via the coupling block 60. As a result, in the cloth feed mechanism 12, the roller support portion 70 can be removed from the motor drive portion 50 and can be exchanged with the other roller support portions 170 and 270. The cloth feed mechanism 12 can realize commonality of parts when using each of the roller support portions 70, 170 and 270. When one of the motor drive portion 50 and the roller support portion 70 has failed, the cloth feed mechanism 12 can be continuously used as long as only the failed component is replaced with a new component. The cloth feed mechanism 12 can continue to use the normally functioning component and it is not necessary to replace the whole mechanism. It is thus possible to reduce maintenance costs and the like.

In addition to the above-described embodiment, various modifications can be made to the present invention. In the above-described embodiment, the power of the third motor 14 is transmitted to the lower roller 13 using the first pulley 58, the second pulley 73 and the belt 80. The present invention is not limited to this transmission method, and a method may be adopted, for example, in which a plurality of gears are combined to transmit the power. The transmission method of the power of the second motor 22 to the upper roller 18 is also not limited to the pulleys and the belt, and another transmission method may be adopted. For example, a method may be adopted in which a plurality of gears are combined to transmit the power. Further, the upper roller mechanism 9 rotates the upper roller 18 using the power of the second motor 22, but the second motor 22 may be omitted and the upper roller 18 may be simply supported in a rotatable manner.

In the above-described embodiment, the column type cloth feed mechanism 12 and the arm type cloth feed mechanism 320 are explained as examples of the cloth feed mechanism that can be attached to the cloth bonding apparatus 1. However, the cloth bonding apparatus 1 may be configured such that another cloth feed mechanism can be attached. For example, a cloth feed mechanism that supports the lower roller 13 in a diagonal direction can also be used. Further, a cloth feed mechanism that can adjust an angle of support of a support mechanism that supports the lower roller 13 can also be used.

In the above-described embodiment, the roller support portions 170 and 270 are explained as the other modes of the roller support portion 70, but other modes are also possible. For example, a modified mode of the roller support portion is also possible, in which a width, a size, a material, a surface shape of a rolling contact surface etc. of the lower roller 13 are different.

In the above-described embodiment, the motor drive portion 50 and the roller support portion 70 are coupled together using the coupling block 60. The present invention can adopt a mode in which the coupling block 60 is not used and an end portion of the motor drive portion 50 and an end portion of the roller support portion 70 are directly fixed to each other using a fixing device or the like.

The cloth bonding apparatus 1 of the above-described embodiment is provided with the pulse motor 30 and the stopper 35 etc. that are used to finely adjust the position of the nozzle 17, but the pulse motor 30 and the stopper 35 may be omitted.

In the above-described embodiment, the cloth feed mechanisms 12 and 320 are attached to the mounting surface 2A of the cloth bonding apparatus 1 via the mounting members 40 and 140. The present invention is not limited to those examples and the cloth feed mechanisms 12 and 320 may have a structure in which they are directly attached to the mounting surface 2A of the cloth bonding apparatus 1. The cloth feed mechanisms 12 and 320 may have a structure in which they are fixed to the mounting surface 2A in a non-detachable manner.

In the above-described embodiment, in the cloth feed mechanism 320, the lower roller 13 that is disposed facing the upper roller 18 is supported substantially horizontally from the upstream side in the cloth feed direction, but the lower roller 13 may be supported substantially horizontally from the downstream side in the cloth feed direction. In this case, the cloth feed mechanism may be attached to the mounting surface 2A of the base portion 2 while being oriented such that the lower roller 13 is positioned to the front.

In the above-described embodiment, the cloth feed mechanism 12 is provided with the tension pulley 59, but the tension pulley 59 may be omitted. The arrangement of the tension pulley 59 may be different to that of the above-described embodiment.

In the above-described embodiment, as the coupling structures of each of the motor drive portion 50, the coupling blocks 60 and 260, the joint block 266, the roller support portions 70, 170 and 270 and the covers 90 and 290, the structure in which they are fastened using screws in the various holes is explained as an example, but the number, positions and sizes etc. of the various holes are not limited. Another coupling structure is also possible in the present invention. For example, a structure in which pins are inserted into various holes and the components are coupled together, or a structure in which each of the components mutually hold each other and are coupled together are also possible.

In the above-described embodiments, the outer diameter of the lower roller 13 is larger than the outer diameter of the upper roller 18, but the diameters may be the same, or the outer diameter of the lower roller 13 may be smaller than the outer diameter of the upper roller 18.

## Claims

1. A cloth feed mechanism (12, 320) of a cloth bonding apparatus (1), the cloth feed mechanism including a second roller (13) disposed facing a first roller on a downstream side in a feed direction of two cloths with respect to a nozzle provided to discharge an adhesive between the two cloths facing each other, the cloth feed mechanism being configured to clamp, between the first roller and the second roller, the two cloths to which the adhesive is adhered and feed the two cloths, the cloth feed mechanism comprising:
a motor (14) having an output shaft,
a main body portion (45, 245) extending in a long-side direction orthogonal to a direction in which the output shaft of the motor extends and including a first main body portion (50) configured to store the motor on one end side in the long-side direction of the main body portion and also configured to be attached to a base portion of the cloth bonding apparatus, and a second main body portion (70, 170, 270) supporting the second roller on another end side in the long-side direction of the main body portion; and
a transmission portion (80, 280) disposed inside the main body portion and configured to transmit power of the motor to the second roller;
**characterized in that** the second main body portion (70, 170, 270) is configured to be detachably attached to the first main body portion (50).

2. The cloth feed mechanism according to claim 1, wherein
the first main body portion is provided with a first pulley (58) which is coupled to the output shaft of the motor,
the second main body portion is provided with a second pulley (73) which has a pivotal shaft that is parallel to a pivotal shaft of the first pulley and which rotates integrally with the second roller,
the transmission portion is an endless belt (80, 280) which is stretched between the first pulley and the second pulley,
the main body portion includes a joint portion (60, 260) that is provided between the first main body portion and the second main body portion and that detachably couples the first main body portion and the second main body portion, and
the joint portion is capable of internally storing the belt.

3. The cloth feed mechanism according to claim 2, wherein
the first main body portion is provided with a tension pulley (59) which imparts a tension to the belt,
the first pulley is disposed coaxially with the output shaft of the motor,
the output shaft of the motor is disposed in a position that is displaced in a specific direction with respect to the second pulley, the specific direction being orthogonal to the long-side direction and being orthogonal to an extending direction of the pivotal shaft of the second pulley, and
the tension pulley is disposed on an outer side of the belt, on the side of the direction of displacement in the specific direction of the output shaft with respect to the second pulley.

4. The cloth feed mechanism according to claim 3, wherein
the long-side direction is the horizontal direction,
the specific direction is the downward direction,
a cover (290) is provided that covers the first main body portion, the second main body portion and the joint portion from above, and
the cover includes a planar portion (291) that extends horizontally on an upstream side of the second roller in the feed direction of the cloth.

5. A cloth bonding apparatus (1) including the cloth feed mechanism (12, 320) according to any one of claims 1 to 4, the cloth bonding apparatus comprising;
a nozzle (17) that discharges adhesive between two cloths that are disposed facing each other; and
a first roller (18) that is disposed on a downstream side in a feed direction of the two cloths with respect to the nozzle and that feeds the two cloths;
wherein the cloth feed mechanism has the second roller (13) that is disposed below the first roller and in a position facing the first roller,
and wherein the two cloths to which the adhesive is adhered are clamped between and fed by the first roller and the second roller.

6. The cloth bonding apparatus according to claim 5, further comprising:
a base portion (2) that is a base of the cloth bonding apparatus; and
a mounting portion (40, 140) that is fixed to the base portion and that has a wall portion (41, 141) to which a first main body portion is attached;
wherein
a fixing position of the cloth feed mechanism with respect to the wall portion of the mounting portion is changeable.

## Patentansprüche

1. Tuchvorschubmechanismus (12, 320) eines Tuchfügegerätes (1), wobei der Tuchvorschubmechanismus eine zweite Walze (13) aufweist, die gegenüber einer ersten Walze an einer stromabwärtigen Seite in einer Vorschubrichtung der beiden Tücher hinsichtlich einer Düse angeordnet ist, die zum Auslassen eines Klebemittels zwischen den beiden Tüchern vorgesehen ist, die sich aneinander gegenüberliegen, wobei der Tuchvorschubmechanismus dazu konfiguriert ist, zwischen der ersten Walze und der zweiten Walze die beiden Tücher einzuklemmen, an denen das Klebemittel haftet, und die beiden Tücher vorzuschieben, wobei der Tuchvorschubmechanismus folgendes aufweist:
einen Motor (14) mit einer Abgabewelle,
einen Hauptkörperabschnitt (45, 245), der sich in einer Langseitenrichtungen orthogonal zu einer Richtung erstreckt, in der sich die Abgabewelle des Motors erstreckt, und der einen ersten Hauptkörperabschnitt (50) aufweist, der dazu konfiguriert ist, den Motor an einer Endseite in der Langseitenrichtung des Hauptkörperabschnitts aufzunehmen, und der außerdem dazu konfiguriert ist, an einen Basisabschnitt des Tuchfügegerätes angebracht zu werden, und einen zweiten Hauptkörperabschnitt (70, 170, 270), der die zweite Walze an einer anderen Endseite in der Langseitenrichtung des Hauptkörperabschnitts stützt; und
einen Übertragungsabschnitt (80, 280), der im Inneren des Hauptkörperabschnitts angeordnet und dazu konfiguriert ist, eine Leistung des Motors zu der zweiten Walze zu übertragen;
**dadurch gekennzeichnet, dass** der zweite Hauptkörperabschnitt (70, 170, 270) dazu konfiguriert ist, lösbar an dem ersten Hauptkörperabschnitt (50) angebraucht zu werden.

2. Tuchvorschubmechanismus gemäß Anspruch 1, wobei
der erste Hauptkörperabschnitt mit einer ersten Riemenscheibe (58) versehen ist, die an der Abgabewelle des Motors gekoppelt ist,
wobei der zweite Hauptkörperabschnitt mit einer zweiten Riemenscheibe (73) versehen ist, die eine Schwenkwelle hat, die parallel zu einer Schwenkwelle der ersten Riemenscheibe ist, und die sich einstückig mit der zweiten Walze dreht,
der Übertragungsabschnitt einen Endlosriemen (80, 280) ist, der zwischen der ersten Riemenscheibe und der zweiten Riemenscheibe gespannt ist,
der Hauptkörperabschnitt einen Fügeabschnitt (60, 260) aufweist, der zwischen dem ersten Hauptkörperabschnitt und dem zweiten Hauptkörperabschnitt vorgesehen ist, und der den ersten Hauptkörperabschnitt lösbar an den zweiten Hauptkörperabschnitt koppelt, und
der Fügeabschnitt den Riemen im Inneren aufnehmen kann.

3. Tuchvorschubmechanismus gemäß Anspruch 2, wobei
der erste Hauptkörperabschnitt mit einer Spannriemenscheibe (59) versehen ist, die eine Spannung auf den Riemen aufbringt,
die erste Riemenscheibe koaxial mit der Abgabewelle des Motors angeordnet ist,
die Abgabewelle des Motors an einer Position angeordnet ist, die in einer spezifischen Richtung hinsichtlich der zweiten Riemenscheibe versetzt ist, wobei die spezifische Richtung orthogonal zu der Langseitenrichtung und orthogonal zu einer Erstreckungsrichtung der Schwenkwelle der zweiten Riemenscheibe ist, und
die Spannriemenscheibe an einer Außenseite des Riemens an der Seite der Versetzungsrichtung der spezifischen Richtung der Abgabewelle hinsichtlich der zweiten Riemenscheibe angeordnet ist.

4. Tuchvorschubmechanismus gemäß Anspruch 3, wobei
die Langseitenrichtung die horizontale Richtung ist,
die spezifische Richtung die Abwärtsrichtung ist,
eine Abdeckung (290) vorgesehen ist, die den ersten Hauptkörperabschnitt, den zweiten Hauptkörperabschnitt und den Fügeabschnitt von oben abdeckt, und
die Abdeckung einen Ebenenabschnitt (291) aufweist, der sich horizontal an einer stromaufwärtigen Seite der zweiten Riemenscheibe in der Vorschubrichtung des Tuches erstreckt.

5. Tuchfügegerät (1) mit dem Tuchvorschubmechanismus (12, 320) gemäß einem der Ansprüche 1 bis 4, wobei das Tuchfügegerät folgendes aufweist:
eine Düse (17), die ein Klebemittel zwischen zwei Tüchern auslässt, die einander gegenüberliegend angeordnet sind; und
eine erste Walze (18), die an einer stromabwärtigen Seite in einer Vorschubrichtung der beiden Tücher hinsichtlich der Düse angeordnet ist und die beiden Tücher vorschiebt;
wobei der Tuchvorschubmechanismus die zweite Walze (13) hat, die unter der ersten Walze und an einer Position gegenüber der ersten Walze angeordnet ist,
und wobei die beiden Tücher, zu denen das Klebemittel ausgelassen wird, zwischen die erste Walze und die zweite Walze eingeklemmt sind und durch diese vorgeschoben werden.

6. Tuchfügegerät gemäß Anspruch 5, des Weiteren mit:
Einem Basisabschnitt (2), der eine Basis des Tuchfügegerätes ist; und
einen Montageabschnitt (40, 140), der an dem Basisabschnitt befestigt ist, und der einen Wandabschnitt (41, 141) hat, an dem ein erster Hauptkörperabschnitt angebracht ist; wobei
eine Befestigungsposition des Tuchvorschubmechanismus hinsichtlich des Wandabschnitts des Montageabschnitts änderbar ist.

## Revendications

1. Mécanisme d'alimentation en tissu (12, 320) d'un appareil de liaison de tissu (1), le mécanisme d'alimentation en tissu incluant un second rouleau (13) disposé en face d'un premier rouleau sur un côté aval dans une direction d'alimentation de deux tissus par rapport à une buse prévue pour décharger un adhésif entre les deux tissus se faisant face, le mécanisme d'alimentation en tissu étant configuré pour serrer, entre le premier rouleau et le second rouleau, les deux tissus auxquels vient adhérer l'adhésif et alimenter en les deux tissus, le mécanisme d'alimentation en tissu comprenant :
un moteur (14) ayant un arbre de sortie,
une partie de corps principal (45, 245) s'étendant dans une direction longitudinale orthogonale à une direction dans laquelle s'étend l'arbre de sortie du moteur et incluant une première partie de corps principal (50) configurée pour stocker le moteur sur un côté d'extrémité dans la direction longitudinale de la partie de corps principal et configurée également pour être attachée à une partie de base de l'appareil de liaison de tissu, et une seconde partie de corps principal (70, 170, 270) supportant le second rouleau sur un autre côté d'extrémité dans la direction longitudinale de la partie de corps principal ; et
une partie de transmission (80, 280) disposée à l'intérieur de la partie de corps principal et configurée pour transmettre une puissance du moteur au second rouleau ;
**caractérisé en ce que** la seconde partie de corps principal (70, 170, 270) est configurée pour être attachée de manière détachable à la première partie de corps principal (50).

2. Mécanisme d'alimentation en tissu selon la revendication 1, dans lequel
la première partie de corps principal est pourvue d'une première poulie (58) qui est couplée à l'arbre de sortie du moteur,
la seconde partie de corps principal est pourvue d'une seconde poulie (73) qui a un arbre pivotant qui est parallèle à un arbre pivotant de la première poulie et qui tourne de manière solidaire avec le second rouleau,
la partie de transmission est une courroie sans fin (80, 280) qui est étirée entre la première poulie et la seconde poulie,
la partie de corps principal inclut une partie de jonction (60, 260) qui est prévue entre la première partie de corps principal et la seconde partie de corps principal et qui couple de manière détachable la première partie de corps principal et la seconde partie de corps principal, et
la partie de jonction est capable de stocker la courroie intérieurement.

3. Mécanisme d'alimentation en tissu selon la revendication 2, dans lequel
la première partie de corps principal est pourvue d'une poulie de tension (59) qui donne une tension à la courroie,
la première poulie est disposée coaxialement à l'arbre de sortie du moteur,
l'arbre de sortie du moteur est disposé dans une position qui est déplacée dans une direction spécifique par rapport à la seconde poulie, la direction spécifique étant orthogonale à la direction longitudinale et étant orthogonale à une direction d'extension de l'arbre pivotant de la seconde poulie, et
la poulie de tension est disposée sur un côté externe de la courroie, sur le côté de la direction de déplacement dans la direction spécifique de l'arbre de sortie par rapport à la seconde poulie.

4. Mécanisme d'alimentation en tissu selon la revendication 3, dans lequel
la direction longitudinale est la direction horizontale,
la direction spécifique est la direction descendante,
il est prévu un couvercle (290) qui couvre la première partie de corps principal, la seconde partie de corps principal et la partie de jonction depuis le dessus, et
le couvercle inclut une partie plane (291) qui s'étend horizontalement sur un côté amont du second rouleau dans la direction d'alimentation du tissu.

5. Appareil de liaison de tissu (1) incluant le mécanisme d'alimentation en tissu (12, 320) selon l'une quelconque des revendications 1 à 4, l'appareil de liaison de tissu comprenant :
une buse (17) qui décharge de l'adhésif entre deux tissus qui sont disposés face à face ; et
un premier rouleau (18) qui est disposé sur un côté aval dans une direction d'alimentation des deux tissus par rapport à la buse et qui alimente en les deux tissus ;
dans lequel le mécanisme d'alimentation en tissu a le second rouleau (13) qui est disposé en dessous du premier rouleau et dans une position faisant face au premier rouleau,
et dans lequel les deux tissus auquel vient adhérer l'adhésif sont serrés entre le premier rouleau et le second rouleau et ceux-ci alimentent en eux.

6. Appareil de liaison de tissu selon la revendication 5, comprenant en outre :
une partie de base (2) qui est une base de l'appareil de liaison de tissu ; et
une partie de montage (40, 140) qui est fixée à la partie de base et qui a une partie de paroi (41, 141) à laquelle est attachée une première partie de corps principal ;
dans lequel
une position de fixation du mécanisme d'alimentation en tissu par rapport à la partie de paroi de la partie de montage peut être changée.
